# EUROPEAN PATENT APPLICATION

(11) **EP 3 106 431 A1**
(43) Date of publication of application: **21.12.2016**
(21) Application number: 15749168.9
(22) Date of filing: 09.02.2015
(51) Int. Cl.: C01B 21/068, B22C 3/00, C01B 33/02, C10M 103/06, C10N 40/36

(54) **SLURRY-DESIGNATED SILICON NITRIDE POWDER AND METHOD FOR PRODUCING SAME, SILICON NITRIDE POWDER SLURRY FOR USE IN MOLD RELEASE AGENT AND METHOD FOR PRODUCING SAME, SILICON NITRIDE POWDER FOR USE IN MOLD RELEASE AGENT, MOLD RELEASE AGENT, AND POLYCRYSTALLINE-SILICON-CASTING MOLD AND METHOD FOR PRODUCING SAME**

(30) Priority: 12.02.2014 JP 2014024075
(71) Applicant: UBE Industries, Ltd., Ube-shi, Yamaguchi 755-8633 (JP)
(72) Inventor: YAMAO, Takeshi, Ube-shi Yamaguchi 755-8633 (JP); HONDA, Michio, Ube-shi Yamaguchi 755-8633 (JP); JIDA, Shinsuke, Ube-shi Yamaguchi 755-8633 (JP)
(74) Representative: Michalski Hüttermann & Partner Patentanwälte mbB
(86) International application number: PCT/JP2015/053542
(87) International publication number: WO 2015/122388

(57) **Abstract**

Provided are: a silicon nitride powder slurry for use in mold release material and capable of forming, on a polycrystalline silicon casting mold, a mold release layer which exhibits favorable mold release properties of a polycrystalline silicon ingot, and which exhibits favorable adhesion to the casting mold after casting the polycrystalline silicon ingot, without requiring use of an additive such as a binder, and without requiring execution of a baking step; a method for producing the same; a silicon nitride powder for mold release material; mold release material; a silicon nitride powder for a slurry use for obtaining the silicon nitride powder slurry for use in the mold release material; a method for producing the same; a polycrystalline silicon casting mold which exhibits favorable mold release properties of a polycrystalline silicon ingot; and a low-cost method for producing the same. The present invention pertains to a silicon nitride powder to be used in a slurry for forming a mold release layer of a polycrystalline silicon casting mold, wherein the specific surface area thereof is 5-50m²/g, the proportion of amorphous silicon nitride is 1.0-25.0 mass%, and the oxygen content is 0.6-2.5 mass%.

## Description

### Technical Field

The present invention relates to a polycrystalline silicon ingot casting mold having a mold release layer formed thereon, which enables to produce a polycrystalline silicon ingot having a high photoelectric conversion efficiency at a low cost, and a method for producing the same, a silicon nitride powder slurry for forming the mold release layer and a method for producing the same, and mold release material constituting the mold release layer.

Further, the present invention relates to a silicon nitride powder for obtaining a silicon nitride powder slurry for forming a mold release layer and a method for producing the same, and a silicon nitride powder slurry for mold release material constituting the mold release layer.

### Background Art

As one type of a semiconductor substrate for producing a solar cell, polycrystalline silicon is widely used and its production amount rapidly increases every year. Polycrystalline silicon is generally produced either by filling silicon melt in a casting mold made of quartz or a dividable casting mold made of graphite and solidifying the silicon melt, or melting silicon contained in a casting mold and solidifying the silicon melt. Recently, in particular, an inexpensive polycrystalline silicon substrate is demand. In order to satisfy the demand, it is necessary to produce a polycrystalline silicon ingot at a low cost. To that end, it is important to develop a technique producing a casting mold at a low cost, which enables to produce the polycrystalline silicon ingot in high yield.

In order to produce the polycrystalline silicon ingot in high yield, it is necessary that the polycrystalline silicon ingot is satisfactorily released from the casting mold and is free from chipping and cracking when a solidified silicon ingot is released. In general, a mold release layer is formed on the inner surface of the polycrystalline silicon casting mold in order to satisfactorily release the polycrystalline silicon ingot from the casting mold and to prevent the polycrystalline silicon ingot from being contaminated with impurities. Accordingly, in order to satisfactorily release the polycrystalline silicon ingot from the casting mold, it is necessary to form a dense mold release layer with a high releasing property on the inner surface of the casting mold. Further, it is necessary to form the mold release layer on the inner surface of the casting mold at a low cost together with forming the dense mold release layer with a high releasing property on the inner surface of the casting mold. The material of the mold release layer (mold release material) includes a high-purity powder of silicon nitride, silicon carbide, and silicon oxide or a mixed powder thereof, considering that it has generally a high melting point and dose not contaminate a silicon ingot. In the past, many researches have been carried out to develop mold release materials formed of these powders, a method of coating the surface of the casting mold with the mold release material to form the mold release layer, and a method of producing a silicon ingot using the casting mold with the mold release layer.

For example, Patent Literature 1 discloses a method for producing a silicon ingot casting mold which includes surface-oxidizing a silicon nitride powder at a temperature of 700 to 1300°C in the atmosphere, blending with a silicon dioxide powder having an average particle size of about 20 µm, adding an aqueous solution of polyvinyl alcohol (PVA) as a binder to the mixture and kneading them to form a green body, dropping an aqueous solution of a binder to form a slurry, coating a casting mold with the slurry, heating (drying) the slurry-coated casting mold at a temperature of 160-260°C, and repeating the coating and heating steps ten times.

Patent Literature 2 discloses a method for producing a polycrystalline silicon casting mold which includes coating a casting mold with a slurry containing silicon nitride powders with different average particle sizes obtained by calcining an amorphous silicon nitride powder contained in a graphite crucible, dying and heating the slurry-coated casting mold in an atmospheric air at a temperature of 1100°C. Further, Patent Literature 2 discloses that, by forming a mold release layer in which proportion of fine silicon nitride particles is high on a mold side while proportion of coarse silicon nitride particles is high on a molten silicon, it is possible to prevent sticking of a polycrystalline silicon ingot on a mold surface and occurrences of losses and breakage of the polycrystalline silicon ingot when the polycrystalline silicon ingot is released, and to obtain a high quality silicon ingot in high yield.

### Citation List

### Patent Literatures

Patent Literature 1: JP 2010-195675 A
Patent Literature 2: WO 2012/090541
Patent Literature 3: JP H09-156912 A

### Summary of Invention

### Technical Problem

Meanwhile, with regard to a method for producing a casting mold described in Patent Literature 1, it is necessary to perform many steps including heating a silicon nitride powder in advance at a high temperature of 700-1300°C in the atmosphere, blending the silicon nitride powder and a silicon dioxide powder, adding a binder aqueous solution to the resulting mixture, kneading the resulting mass, and diluting the kneaded mass to prepare a slurry. Further, the method necessitates equipment for oxidizing the silicon nitride powder and many complicated steps, and thus producing cost of the casting mold becomes high. Furthermore, in the method, heating temperature after coating the casting mold with mold release material is set to 300°C or lower. Since it is difficult to remove C (carbon) derived from the binder from the mold release layer at such a low temperature, C (carbon) is mixed into a molten silicon from the mold release layer and remains in a polycrystalline silicon ingot as an impurity. Where the polycrystalline silicon ingot is formed into a substrate for a solar cell, it is not possible to produce a solar cell having a high photoelectric transfer efficiency. Since, in order to produce a polycrystalline silicon ingot of low C (carbon) content, it is necessary to elevate a heating temperature after coating with mold release material, producing cost of the casting mold increases more.

With regard to the method for producing the casting mold described in Patent Literature 2, it is necessary to perform steps of blending a silicon nitride powder with larger average particle size and a silicon nitride powder with smaller average particle size and baking a mold release layer at a high temperature of 1100°C. Thus, since the method necessitates a mixing step requiring a long time and a high temperature-heating apparatus for baking the mold release layer, it is not a low-cost method. Further, since, in order to adjust the average particle size of the silicon nitride powder, it is necessary to adjust the filling amount of a raw material by changing the filling method of the raw material in a calcining step for producing the silicon nitride powder, the productivity of the silicon nitride powder tends to deteriorate. Furthermore, since the silicon nitride powder for mold release material is obtained by introducing an amorphous Si-N(-H) compound into a graphite crucible and calcining it, Fe (iron) inevitably existing in the graphite crucible is mixed into the silicon nitride powder, and the resulting silicon nitride powder contains a certain amount of Fe (iron). Since Fe (iron) is easily mixed into molten silicon from the casting mold with the mold release layer formed of the silicon nitride powder, there is also a problem that it is difficult to produce a substrate with a high photoelectric transfer efficiency using the resulting polycrystalline silicon ingot.

The present invention is completed in view of the problems of prior art as described above, and it is an object of the present invention to provide a silicon nitride powder slurry for mold release material which enables to form a mold release layer on a polycrystalline silicon casting mold having an excellent mold release property without additives such as an binder and baking step, and a method for producing the same; a silicon nitride powder for mold release material; mold release material; a silicon nitride powder for obtaining a silicon nitride powder slurry for mold release material and a method for producing the same; and a polycrystalline silicon casting mold having an excellent mold release property of a polycrystalline silicon ingot and a method for producing the same at a low cost.

### Solution to Problem

Inventors of the present invention conducted intensive studies of a silicon nitride powder for forming a mold release layer on a casting mold which enables to produce a polycrystalline silicon ingot in high yield and at a low cost to solve the problems described above, and as a result, found that a silicon nitride powder containing a certain amorphous polycrystalline silicon and having a certain specific surface area and a degree of oxidation (oxygen content) is suitable for solving the problems described above.

Further, the inventors of the present invention found that the slurry containing the silicon nitride powder described above enables to form a dense and strong mold release layer without baking step after coating step, that mold release material for a polycrystalline silicon casting mold, which is formed of a silicon nitride powder having a certain oxidation degree (oxygen content) and is obtained by water-dispersing the slurry described above and dying the dispersion, enables to form a mold release layer having a high adhesion with a casting mold without additives such as a binder or the like, and that the slurry enables to form a mold release layer having an excellent mold release property of a polycrystalline silicon ingot from the casting mold. Thus, the inventors of the present invention completed the present invention.

According to the present invention, there is provided a silicon nitride powder to be used in a slurry use for forming a mold release layer of a polycrystalline silicon casting mold, which has a specific surface area of 5-50m²/g, a proportion of amorphous silicon nitride of 1.0-25.0 mass%, and an oxygen content of 0.6-2.5 mass%.

According to the present invention, there is provided a silicon nitride powder slurry for mold release material, which is obtained by blending the above-mentioned silicon nitride powder and water.

According to the present invention, there is provided a silicon nitride powder for mold release material, which is obtained by blending the above-mentioned silicon nitride powder and water to form a slurry, and drying the slurry, and which has an oxygen content of 0.7-5.0 mass%.

According to the present invention, there is provided mold release material for forming a mold release layer to be formed on a polycrystalline silicon casting mold, which includes the above-mentioned silicon nitride powder.

According to the present invention, there is provided a polycrystalline silicon casting mold, which includes the mold release layer formed on a casting mold, the mold release layer being formed of the above-mentioned mold release material.

According to the present invention, there is provided a method for producing the above-mentioned silicon nitride powder for a slurry use, which includes thermally decomposing an amorphous Si-N (-H) compound at a temperature of 1200-1400°C in an atmosphere of at least one gas selected from the group consisting of a nitrogen gas, an inert gas and a reducing gas, in a rotary kiln furnace, or in a batch furnace or pusher-type continuous furnace in which a temperature rising rate at a temperature of 1100-1400°C is adjusted to be 10-1000°C/hr, the amorphous Si-N (-H) compound being obtained by thermally decomposing a nitrogen-containing silane compound and having a specific surface area of 300-800m²/g.

According to the present invention, there is provided a method for producing a silicon nitride powder slurry for mold release material, which includes blending the above-mentioned silicon nitride powder to be used in a slurry and water

According to the present invention, there is provided a method for producing a polycrystalline silicon casting mold, which includes: blending above-mentioned silicon nitride powder and water to form a slurry; coating a surface of a polycrystalline silicon casting mold with the slurry; and drying the slurry on the surface of the casting mold to form a mold release layer.

### Advantageous Effects of Invention

Where a mold release layer is formed on a polycrystalline silicon casting mold using a silicon nitride powder slurry for mold release material containing a silicon nitride powder for a slurry use, it is possible to form a dense and strong mold release layer on the inner surface of a casting mold without using a binder such as PVA or the like and baking step after coating step, and to release the polycrystalline silicon ingot from the casting mold without chipping and cracking of the ingot.

According to the present invention, there is provided a silicon nitride powder slurry for mold release material which enables to form a mold release layer on a polycrystalline silicon casting mold having an excellent mold release property without additives such as a binder or the like and baking step, and a method for producing the same; a silicon nitride powder for mold release material; mold release material; a silicon nitride powder for obtaining a silicon nitride powder slurry for mold release material and a method for producing the same; and a polycrystalline silicon casting mold having an excellent mold release property of a polycrystalline silicon ingot and a method for producing the same at a low cost.

### Brief Description of Drawings

FIG. 1 is a TEM photograph of silicon nitride powder containing amorphous silicon nitride used in Example 5.
FIG. 2 is a TEM photograph of silicon nitride powder with large amorphous silicon nitride content used in Comparative Example 4.

### Description of Embodiments

A polycrystalline silicon casting mold according to the present invention is obtained by a producing method including blending a silicon nitride powder of the present invention and water to form a slurry, coating a polycrystalline silicon casting mold with the slurry, and drying the slurry on the casting mold to form a mold release layer.

In the present invention, a silicon nitride powder for mold release material is obtained by blending the silicon nitride powder for a slurry use and water to form a slurry, and drying the slurry to oxidize the silicon nitride powder contained in the slurry. That is, in the present invention, the silicon nitride powder after oxidation is distinguished from the silicon nitride powder for a slurry use and is defined as a silicon nitride powder for mold release material. The silicon nitride powder for mold release material also forms a mold release layer obtained by coating the surface of the casting mold with the slurry and drying the slurry. The silicon nitride powder for mold release material according to the present invention has an oxygen content of 0.7-5.0 mass% and is useful for mold release material of a polycrystalline silicon casting mold which enables to produce a polycrystalline silicon ingot at a low cost.

Further, in the present invention, a slurry obtained by blending the silicon nitride powder for a slurry use and water is defined as a silicon nitride powder slurry. Where the silicon nitride powder for a slurry use is blended with water to form a silicon nitride powder slurry for mold release material, and a mold release layer is formed using the silicon nitride powder slurry for mold release material, it is unnecessary to bake the mold after slurry coating and it is possible to produce a polycrystalline silicon casting mold with a mold release layer having an excellent adhesion and mold release property.

### (Silicon nitride powder for slurry use)

There will be described a silicon nitride powder for a slurry use according to the present invention.

The silicon nitride powder for a slurry use according to the present invention is a silicon nitride powder for obtaining a silicon nitride powder slurry for mold release material and having a specific surface area of 5-50m²/g, a proportion of amorphous silicon nitride of 1.0-25.0 mass%, and an oxygen content of 0.6-2.5 mass%.

The silicon nitride powder for a slurry use according to the present invention has a specific surface area of 5-50m²/g. When the specific surface area of the silicon nitride powder is less than 5m²/g, adhesion between the silicon nitride powder particles and the casting mold, and adhesion among the silicon nitride powder particles in the mold release layer deteriorate. Further, the proportion of amorphous silicon nitride becomes less than 1.0 mass% and the oxygen content becomes less than 0.6 mass% . As a result, the oxygen content of the silicon nitride powder constituting the mold release layer obtained by coating the casting mold with the silicon nitride powder slurry formed by blending the silicon nitride powder for a slurry use and water and drying the slurry, becomes below 0.7 mass%.

On the other hand, when the specific surface area of the silicon nitride powder exceeds 50m²/g, the proportion of amorphous silicon nitride containing ultrafine amorphous silicon nitride particles, which are easily oxidizable in water, exceeds 25.0 mass%. When the proportion of amorphous silicon nitride exceeds 25.0 mass%, the oxygen content of the silicon nitride powder exceeds 2.5 mass%, and the oxygen content of the silicon nitride powder constituting the mold release layer obtained by coating the casting mold with the silicon nitride powder slurry formed by blending the silicon nitride powder for a slurry use and water exceeds 5.0 mass%.

The silicon nitride powder for a slurry use according to the present invention has a proportion of amorphous silicon nitride of 1.0-25.0 mass%. The amorphous silicon nitride is present not only as amorphous silicon nitride particles, but also unevenly distributed on the surfaces of the crystalline silicon nitride particles. For instance, an average diameter of primary particles of a silicon nitride powder having a specific surface area of 10m²/g is about 2000 angstroms, and it can be confirmed by a transmission electron microscope (TEM) that an amorphous silicon nitride layer having a very small thickness of a few angstroms is present on the surface of the primary particles. This amorphous silicon nitride layer is oxidized in the atmosphere, and is connected to a top surface silicon oxide layer, a silicon oxynitride layer and a crystalline silicon nitride layer in this order with slant compositions. Though the amorphous silicon nitride layer has a very small thickness of a few angstroms, it plays an important role in particular for improving an adhesion of the silicon nitride mold release layer to the casting mold in the case of the casting mold made of quartz (SiO₂). When the silicon nitride powder for a slurry use is blended with water to form a slurry, a Si-OH group is formed on the surfaces of the silicon nitride particles. When the surface of the casting mold is coated with the slurry and the slurry is dried, the Si-OH group is dehydrated to form Si-O-Si bonds among the silicon nitride particles or between the silicon nitride particles and the casting mold. As a result, adhesion among the silicon nitride particles or between the silicon nitride particles and the casting mold is improved. For instance, even if the slurry-coated casting mold is merely dried at a temperature of 30-120°C without baking at a high temperature, the mold release layer formed of silicon nitride is firmly formed on the surface of the casting mold. However, when the proportion of amorphous silicon nitride in the silicon nitride powder is less than 1.0 mass%, the adhesive effect is restrictive and it remains within the bounds of lowering a baking temperature to about 400°C. Accordingly, since, where only drying is performed, adhesion between the mold release layer and the surface of the casting mold and among the silicon nitride particles in the mold release layer is low and the mold release layer is easily peeled off from the surface of the casting mold, it is not possible to produce an excellent silicon casting mold.

On the other hand, when the proportion of amorphous silicon nitride in the silicon nitride powder exceeds 25.0 mass%, oxidation of ultrafine amorphous silicon nitride proceeds in preparation of the silicon nitride powder slurry for mold release material. Then, the slurry decomposes to generate ammonium ions which make the slurry basic and gelate the slurry. As a result, it takes much time to dry the mold release layer after coating with the slurry. Moreover, the dried mold release layer easily flakes off and has much proportion of silicon oxide therein and increased wettability with a silicon melt. Thus, since the silicon ingot sticks on a casting mold surface, cracks and breaks when the solidified silicon ingot is released from the casting mold, it is produced in low yield.

The silicon nitride powder for a slurry use according to the present invention has an oxygen content of 0.6-2.5 mass% . When the oxygen content is below 0.6 mass%, the oxygen content of the silicon nitride powder constituting the mold release layer obtained by coating the casting mold with the silicon nitride powder slurry formed by blending the silicon nitride powder for a slurry use and water and drying the slurry becomes below 0.7 mass%. Then, adhesion between the mold release layer and the casting mold and among the silicon nitride particles in the mold release layer becomes low. Therefore, it is difficult to form a dense mold release layer having a high adhesion by only drying. In order to form a mold release layer, it is necessary to bake it at a high temperature. This causes damage to the casting mold, and even if the mold release layer is baked at a high temperature, it is difficult to improve adhesion between the mold release layer and the casting mold. Further, where the casting mold with such a mold release layer is used, the silicon ingot sticks on a casting mold surface, cracks and breaks when releasing the solidified silicon ingot, it is produced in low yield.

On the other hand, when the oxygen content exceeds 2.5 mass%, the oxygen content of the silicon nitride powder constituting the mold release layer obtained by coating the casting mold with the silicon nitride powder slurry formed by blending the silicon nitride powder for a slurry use and water, and drying the slurry, exceeds 5.0 mass%. Then, the mold release layer has an increased wettability with a silicon melt. Thus, since the silicon ingot sticks on a casting mold surface, cracks and breaks when the solidified silicon ingot is released from the casting mold, it is produced in low yield.

### (Method for producing silicon nitride powder for slurry use)

Next, there will be described a method for producing silicon nitride powder for a slurry use.

In the present invention, it is possible to produce a silicon nitride powder for a slurry use, which has a proportion of amorphous silicon nitride of 1.0-25.0 mass%, by thermally decomposing an amorphous Si-N(-H) compound obtained by thermally decomposing a nitrogen-containing silane compound at a temperature of 1200-1400°C in an atmosphere of at least one gas selected from the group consisting of a nitrogen gas, an inert gas and a reducing gas. Specifically, the silicon nitride powder for a slurry use according to the present invention can be obtained by calcining the amorphous Si-N(-H) compound having a specific surface area of 300-800m²/g in an atmosphere of nitrogen-containing inert gas or nitrogen-containing reducing gas in a batch furnace, a pusher-type continuous furnace, or a rotary kiln furnace. Preferably, calcining is performed by heating the amorphous Si-N(-H) compound in a temperature rising rate of 10-1000°C/hr at a temperature of 1100-1400°C in the case of a batch furnace or a pusher-type continuous furnace, and at a temperature rising rate of preferably 1500-6000°c/hr in the case of a rotary kiln furnace, and keeping a temperature of 1200-1400°C.

The amorphous Si-N(-H) compound used in the present invention includes an amorphous Si-N(-H) compound containing Si, N and H, which is obtained thermally decomposing a part or all of a nitrogen-containing silane compound such as silicon diimide, silicon tetraamide, silicon chloroimide or the like, or amorphous silicon nitride containing Si and N, and is represented by the following composition formula (1). Incidentally, the amorphous Si-N (-H) compound in the present invention includes a series of compounds including Si₆N₁(NH)₁₀.₅ in which x denotes 0.5 and amorphous silicon nitride in which x denotes 4. Si₆N₆(NH)₃ in which x denotes 3 is called as silicon nitrogen imide.

Si₆N₂ₓ(NH)₁₂₋₃ₓ (1)

wherein x denotes 0.5-4, and the compound may one containing halogen as an impurity though it is not recited in the formula.

In the present invention, the nitrogen-containing silane compound includes silicon diimide, silicon tetraamide, silicon chloroimide or the like. These compounds are represented by the following composition formula (2). In the present invention, the nitrogen-containing silane compound represented by the following composition formula (2) in which y denotes 8-12 is called as silicon diimide as a matter of convenience.

Si₆(NH)_{y}(NH₂)_{24-2y} (2)

wherein y denotes 0-12, and the compound may one containing halogen as an impurity though it is not recited in the formula.

The amorphous Si-N(-H) compound in the present invention is produced by prior methods such as a method of thermally decomposing the nitrogen-containing silane compound in an atmosphere of a nitrogen gas or an ammonia gas at a temperature of 1200°C or less, or a method of reacting a silicon halide such as silicon tetrachloride, silicon tetraborate, silicon tetraiodide or the like with ammonia at a high temperature.

The amorphous Si-N (-H) compound, which is a raw material for the silicon nitride powder for a slurry use according to the present invention, has a specific surface area of 300-800m²/g. When the specific surface area of the amorphous Si-N(-H) compound is less than 300m²/g, a very rapid crystallization reaction is caused at a temperature of 1100-1400°C, in particular 1150-1250°C, and the proportion of amorphous silicon nitride immediately after crystallization starts becomes easily less than 1.0 mass%. For that reason, it is difficult to adjust the proportion of amorphous silicon nitride after thermal decomposition within 1.0-25.0 mass%. Further, a calcining container used in the batch furnace or pusher-type continuous furnace and a furnace core tube of the rotary kiln furnace are extremely damaged by heat generated from crystallization to cause rise of production costs. On the other hand, when the specific surface area of the amorphous Si-N(-H) compound exceeds 800m²/g, management of the compound is troubling since it can be oxidized by in an atmosphere containing a small amount of oxygen or water. Accordingly, crystallization is delayed and even if the compound is calcined at a temperature of 1200-1400°C, the proportion of amorphous silicon nitride is large and it is difficult to adjust the proportion of amorphous silicon nitride to 25.0 mass% or less.

Calcining of the amorphous Si-N(-H) compound having a specific surface area of 300-800m²/g is performed using a batch furnace, a pusher-type continuous furnace, or a rotary kiln furnace. The rotary kiln furnace is not limited to a conventional rotary kiln furnace and may be one having a mixing blade or the like therein as long as it has not effect on the advantage of the present invention. The silicon nitride powder for a slurry according to the present invention can be obtained by heating the amorphous Si-N(-H) compound in an atmosphere of nitrogen-containing inert gas or nitrogen-containing reducing gas at a temperature rising rate of 10-1000°C/hr in a temperature of 1100-1400°C and keeping a temperature of 1200-1400°C in the case of a batch furnace or a pusher-type continuous furnace, or heating at a temperature rising rate of about 1500-6000°C/hr and keeping a temperature of 1200-1400°C in the case of a rotary kiln furnace. Though the batch furnace and pusher-type continuous furnace have a temperature rising performance of at most 1200°C/hr in consideration of a heating capacity of the furnace, the rotary kiln furnace can exert a high temperature rising performance by adjusting a rotating speed and an angle of the furnace core tube and setting a temperature of the heater zone to a certain level. However, when the temperature rising rate exceeds about 6000°C/hr, heat conduction to raw materials in the furnace core tube deteriorates and a half-calcined powder tends to be produced.

The silicon nitride powder for a slurry use according to the present invention can be produced by calcining the amorphous Si-N(-H) compound having a specific surface area of 300-800m²/g at a temperature rising rate of 10-1000°C/hr in a temperature of 1100-1400°C and keeping a temperature of 1200-1400°C in the case of a batch furnace or a pusher-type continuous furnace, or calcining the amorphous Si-N(-H) compound at a temperature rising rate of about 1500-6000°C/hr and keeping a temperature of 1200-1400°C in the case of a rotary kiln furnace. Then, the silicon nitride powder slurry containing the powder after coating becomes a silicon nitride powder for mold release material without baking to the casting mold, in which the mold release layer is firmly bonded with the casting mold and the silicon nitride particles in the mold release layer are firmly bonded with each other. Thus, an excellent mold release property of the silicon ingot can be obtained.

Since crystallization of the amorphous Si-N(-H) compound having a large specific surface area proceeds at a low speed and an amount of nuclei generated in the crystallization procedure is small, the specific surface area of the calcined powder easily becomes small. On the other hand, since crystallization of the amorphous Si-N(-H) compound having a small specific surface area proceeds at a high speed and an amount of nuclei generated in the crystallization procedure is large, the specific surface area of the calcined powder easily becomes large.

When calcining is performed at a temperature rising rate lower than 10°C/hr in a temperature of 1100-1400°C using a batch furnace or a pusher-type continuous furnace, crystallization proceeds at a low speed and an amount of nuclei generated in the crystallization procedure is small. Thus formed silicon nitride particles are easily coarsened and it is difficult to obtain the calcined silicon nitride particles having a specific surface area of 5m²/g or more. Further, since also amorphous silicon nitride particles grow, the silicon nitride particles obtained by coating the casting mold with the slurry and drying the coated slurry become inoxidizable. Accordingly, at a temperature rising rate of lower than 10°C/hr, even if the proportion of amorphous silicon nitride after calcining is 1.0-25.0 mass%, the silicon nitride is easily peeled off from the casting mold where the coated slurry is only dried, and the silicon nitride powder is not suitable for mold release material. Moreover, it takes much time for calcining to cause deterioration of production costs.

When the temperature rising rate exceeds 1000°C/hr in a temperature of 1100-1400°C, rapid crystallization proceeds to increase an amount of nuclei generated in the crystallization procedure. Thus, since the specific surface area of the formed silicon nitride particles easily increase and it is difficult to obtain the calcined silicon nitride particles having a specific surface area of 50m²/g or less. Further, according to rapid crystallization, it is difficult to adjust the proportion of amorphous silicon nitride. Where the proportion of amorphous silicon nitride is adjusted to 1.0-25.0 mass%, it is necessary to adjust it before runaway of crystallization. Keeping temperature is less than 1200°C, the calcined powder having much proportion of amorphous silicon nitride tends to be produced. Accordingly, at a temperature rising rate exceeding 1000°C/hr, where the slurry-coated casting mold is merely dried, although it is possible to firmly bond the silicon nitride powder with the casting mold and the silicon nitride particles in the mold release layer with each other, mold release material tends to be easily peeled off in flakes during drying.

On the other hand, when calcining is performed using the rotary kiln furnace, since crystallization proceeds at a low speed at a temperature rising rate lower than 1500°C/hr, an amount of nuclei generated in the crystallization procedure is small. Thus formed silicon nitride particles are easily coarsened. Further, when a temperature rising rate exceeds about 6000°C/hr, crystallization proceeds rapidly and an amount of nuclei generated in the crystallization procedure is larger than that in the case of the batch furnace or pusher-type continuous furnace. The specific surface area of the calcined powder becomes large and a half-calcined powder tends to be produced. It is possible to adjust the proportion of amorphous silicon nitride in the silicon nitride powder for a slurry use mainly at the maximum keeping temperature.

When the calcining temperature in the batch furnace, pusher-type continuous furnace or rotary kiln furnace is 1200°C or less, the proportion of amorphous silicon nitride in the calcined silicon nitride powder exceeds 25.0 mass% and the oxygen content of the silicon nitride powder for mold release material obtained by drying the silicon nitride powder slurry for mold release material exceeds 5.0 mass%. When the calcining temperature exceeds 1400°C and the oxygen content of the calcined amorphous Si-N (-H) compound is small, the proportion of the calcined amorphous silicon nitride is less than 1.0 mass% and the oxygen content of the silicon nitride powder for mold release material obtained by drying the silicon nitride powder slurry for mold release material becomes less than 0.7 mass%.

The specific surface area of the amorphous Si-N(-H) compound can be adjusted by controlling the specific surface area of the nitrogen-containing silane compound which is a raw material thereof and the maximum temperature for thermally decomposing the nitrogen-containing silane compound. The larger the specific surface area of the nitrogen-containing silane compound is and the lower the maximum temperature in thermally decomposing the nitrogen-containing silane compound is, the larger the specific surface area of the amorphous Si-N(-H) compound is. Where the nitrogen-containing silane compound is silicon diimide, it is possible to adjust the specific surface area of the nitrogen-containing silane compound by the known method described in Patent Literature 3, namely a method of changing a volume ratio of silicon halide to liquid ammonia (silicon halide / liquid ammonia (volume ratio)) when silicon halide is reacted with liquid ammonia. It is possible to increase the specific surface area of the nitrogen-containing silane compound by increasing the volume ratio of silicon halide to liquid ammonia.

On the other hand, the oxygen content of the silicon nitride powder for a slurry use can be adjusted by controlling the oxygen content of the amorphous Si-N(-H) compound. The oxygen content of the amorphous Si-N(-H) compound is preferably 0.30-1.40 mass%. The oxygen content of the amorphous Si-N(-H) compound can be adjusted by controlling the oxygen content of the nitrogen-containing silane compound and the oxygen partial pressure (oxygen concentration) in the atmosphere in which the nitrogen-containing silane compound is thermally decomposed. The smaller the oxygen content of the nitrogen-containing silane compound is and the lower the oxygen partial pressure in the atmosphere in which the nitrogen-containing silane compound is thermally decomposed is, the smaller the oxygen content of the amorphous Si-N(-H) compound is. Further, the larger the oxygen content of the nitrogen-containing silane compound is and the higher the oxygen partial pressure in the atmosphere in which the nitrogen-containing silane compound is thermally decomposed is, the larger the oxygen content of the amorphous Si-N(-H) compound is. When silicon halide such as silicon tetrachloride, silicon tetrabromide, silicon tetraiodide or the like is reacted with ammonia in a gas phase, the oxygen content of the nitrogen-containing silane compound can be adjusted by controlling oxygen concentration in an atmosphere in the reaction. When the silicon halide is reacted with liquid ammonia, the oxygen content of the nitrogen-containing silane compound can be adjusted by controlling a water content in an organic reaction solvent. The smaller the water content in an organic reaction solvent is, the smaller the oxygen content of the nitrogen-containing silane compound is. The larger the water content in an organic reaction solvent is, the larger the oxygen content of the nitrogen-containing silane compound is.

The oxygen content of the silicon nitride powder for a slurry use fluctuates depending on the oxygen content of the amorphous Si-N(-H) compound which is a raw material of the silicon nitride powder for a slurry use. The oxygen content of the silicon nitride powder for mold release material obtained by drying the silicon nitride powder slurry for mold release material increases depending on the proportion of the amorphous silicon nitride in the silicon nitride powder for a slurry use. It is possible to eliminate the need for baking the casting mold after coating step by adjusting the population of the amorphous silicon nitride in the silicon nitride powder for a slurry use such that the oxygen content of the silicon nitride powder for mold release material ranges within the scope of the present invention.

The amorphous Si-N(-H) compound may be formed into granular raw material. Where shaped into granular raw material, a bulk density thereof increases and a calcining efficiency is improved. Concurrently, since a fluidity of the raw material increases, it is possible to improve processing performance in the rotary kiln furnace. Moreover, heat conductance of the raw material can be improved.

### (Silicon nitride powder slurry for mold release material and Silicon nitride powder for mold release material)

The silicon nitride powder slurry for mold release material according to the present invention can be produced by blending the silicon nitride powder for a slurry use according to the present invention with water, and particularly preferably by blending the silicon nitride powder for a slurry use according to the present invention with only water.

In the silicon nitride powder slurry for mold release material according to the present invention, the proportion of the silicon nitride powder for a slurry use in the entire slurry ranges preferably 10-60 mass %, more preferably 15-50 mass%.

Further, the silicon nitride powder slurry for mold release material according to the present invention does not necessitate using additives such as a binder or the like and baking the casting mold after coating step. The coated and dried casting mold has an excellent mold release property and the mold release layer has an excellent adhesion with the casting mold after casting a polycrystalline silicon ingot.

The oxygen content of the silicon nitride powder for mold release material is equivalent to that of the silicon nitride powder contained in mold release layer subjected to a series of processes including coating the casting mold with the silicon nitride powder slurry for mold release material and drying it, and ranges 0.7-5.0 mass %. When the oxygen content of the silicon nitride powder for mold release material after the silicon nitride powder slurry for mold release material is dried is less than 0.7 mass %, the mold release layer formed by coating the casting mold with the silicon nitride powder slurry for mold release material and drying it has a poor adhesion with the casting mold. Also adhesion among particles in the mold release layer is poor. Therefore, it is not possible to form a firm mold release layer on the surface of the casting mold by only drying process. When the oxygen content of the silicon nitride powder for mold release material after the silicon nitride powder slurry for mold release material is dried exceeds 5.0 mass %, though the adhesion among the mold release layer particles and between the casting mold and the mold release layer are improved, the mold release layer particles tends to be easily peeled off in flakes during drying. Further, since the wettability of silicon melt to the mold release layer increases, the silicon ingot sticks on a casting mold surface, cracks and breaks when the solidified silicon ingot is released from the casting mold, and thus the yield of silicon ingot decreases.

The oxygen content of the silicon nitride powder for mold release material is determined by the following procedure. Namely, an inner surface of a crucible, which is heated at a temperature of 30-120°C and has a porosity of 16-26%, is spray-coated with the silicon nitride powder slurry according to the present invention and the crucible is dried at a temperature of 30-120°C. After drying, thus formed mold release layer is scraped off from the casting mold and the oxygen content of the silicon nitride powder can be measured. The oxygen content can be measured by "Method for measuring oxygen content of silicon nitride powder for slurry use, silicon nitride powder for mold release material, and amorphous Si-N(-H) compound" described later. On the other hand, the oxygen content can be measured by a simple and easy method including drying a silicon nitride powder slurry for mold release material coated on a dish at a temperature of 30-120°C to the water content less than 0.5 mass %, and measuring the oxygen content. It has been confirmed that the oxygen content of the silicon nitride powder for mold release material measured by this simple and easy method is equivalent to that of the silicon nitride powder for mold release material obtained from the mold release layer formed on the casting mold.

The oxygen content of the silicon nitride powder for mold release material obtained by drying the silicon nitride powder slurry for mold release material can be adjusted by controlling the proportion of amorphous silicon nitride in the silicon nitride powder slurry for mold release material.

When the amorphous Si-N(-H) compound having a specific surface area of 300-800m²/g is calcined in an atmosphere of an inert gas containing nitrogen or a reducing gas containing nitrogen in the batch furnace, pusher-type continuous furnace or rotary kiln furnace, it is possible to prepare the silicon nitride powder for a slurry use having the proportion of amorphous silicon nitride of 1.0-25.0 mass % and the oxygen content of 0.6-2.5 mass%. By using thus prepared silicon nitride powder for a slurry use, it is possible to prepare the silicon nitride powder in which the oxygen content after the silicon nitride powder slurry for mold release material is dried is 0.7-5.0 mass%.

When calcining is performed in a batch furnace or a pusher-type continuous furnace, it is important to heat the amorphous Si-N(-H) compound at a temperature rising rate of 10-1000°C/hr in a temperature of 1100-1400°C and to keep a temperature of 1200-1400°C. The temperature rising rate can be set depending on a temperature rising pattern in the case of the batch furnace, and depending on a temperature rising pattern and a transfer speed of a calcining container in the case of the pusher-type continuous furnace. Though it is difficult to set a correct temperature rising rate in the case of the rotary kiln furnace since the residence time of the raw material in the furnace core tube fluctuates depending on fluidity and repose angle of the raw powder and raw granules, it can be set by setting the rotating speed and angle of the furnace core tube and the temperature of the heater zone to 1500-1600°C/hr.

### (Mold release material)

The polycrystalline silicon casting mold according to the present invention has a mold release layer obtained by coating the inner surface of the casting mold with the silicon nitride powder slurry for mold release material and drying it. The mold release material according to the present invention is a material constituting the mold release layer and features in that it contains the silicon nitride powder for mold release material according to the present invention.

### (Polycrystalline silicon casting mold and Method for producing same)

Next, there is described a polycrystalline silicon casting mold according to the present invention and a method for producing the same.

The polycrystalline silicon casting mold according to the present invention is produced by a method including blending a silicon nitride powder for a slurry use according to the present invention, that is, a silicon nitride powder having a specific surface area of 5-50m²/g, a proportion of amorphous silicon nitride of 1.0-25.0 mass%, and an oxygen content of 0.6-2.5 mass% and water to form a slurry; coating a surface of a polycrystalline silicon casting mold with the slurry; and drying the slurry on the surface of the casting mold to form a mold release layer.

The slurry forming step in the method for producing a polycrystalline silicon casting mold according to the present invention is a step for forming a slurry by blending the silicon nitride powder for a slurry use according to the present invention and water. Since it is possible to form a mold release layer having a high adhesion to a casting mold and high strength by using the silicon nitride powder for a slurry use according to the present invention without a binder such as polyvinyl alcohol (PVA) or the like, the slurry forming step according to the present invention is preferably a step for forming a slurry by blending the silicon nitride powder for a slurry use according to the present invention and water without a binder such as PVA or the like. The silicon nitride powder slurry for mold release material of the polycrystalline silicon casting mold according to the present invention is preferably a slurry obtained by blending the silicon nitride powder for a slurry use according to the present invention and water without a binder such as PVA or the like, more preferably a slurry obtained by blending the silicon nitride powder for a slurry use according to the present invention and only water. It is not preferable that the slurry contains the binder such as PVA or the like. The reason is that, since the slurry with which the casting mold is coated is not subjected to baking, the binder such as PVA or the like contained in the slurry is remained in the mold release layer after drying. The binder is vaporized at a high temperature in producing the silicon ingot, and the mold release layer is easily peeled off.

In the method for producing the polycrystalline silicon casting mold according to the present invention, the slurry obtained in the slurry forming step is a silicon nitride powder slurry for mold release material obtained by blending the silicon nitride powder for a slurry use according to the present invention with water. The silicon nitride powder slurry for mold release material according to the present invention is obtained by adding the predetermined amount of the silicon nitride powder for a slurry use to a vessel together with distilled water, and mixing them for a pre-determined time using a mixing crusher such as vibration mill, ball mill, and paint shaker, which are filled with silicon nitride balls, and when no ball is used, using a stirrer with wing such as paddle wing, or a high-speed planetary stirrer.

More specifically, the silicon nitride powder slurry for mold release material according to the present invention is produced in the following procedure. At first, the silicon nitride powder for a slurry use according to the present invention is disintegrated in air to de-agglomerate it. If necessary, it is preferably that coarse agglomerated particles exceeding 10 µm are removed by an air flow disperse and classify apparatus. The disintegration in air is performed by a batch-type or continuous vibrating mill in air using nylon-coated silicon nitride balls or iron balls. The disintegrated silicon nitride powder for a slurry use is introduced into a polyethylene vessel and water is added such that the proportion of silicon nitride is 10-60 mass%. The silicon nitride powder and water are mixed for a pre-determined time using a mixing crusher such as vibration mill, ball mill, and paint shaker, which are filled with silicon nitride balls, and when no ball is used, using a stirrer with blade such as paddle blade, or a high-speed planetary stirrer to form the silicon nitride powder slurry for mold release material.

In the method for producing a polycrystalline silicon ingot casting mold according to the present invention, the coating step of the slurry is a step of coating the inner surface of the casting mold with the silicon nitride powder slurry for mold release material, while maintaining the fluidity of the particles. The silicon nitride powder slurry for mold release material is preferably applied to the inner surface of a quartz crucible with porosity of 16 to 26% as a casting mold, using a spray, a brush, or a spatula. The fluidity of the slurry is preferably maintained such that the applied slurry is not released from the casting mold to the extent that it does not inhibit the movement of silicon nitride particles in the coated mold release layer.

With regard to the silicon nitride powder slurry with which the casting mold is coated, due to absorption based on capillary phenomenon caused by fine pores present in the casting mold, it is attracted more to near the surface of the casting mold. As a result, the mold release layer is formed on an inner side (i.e., casting mold side). Then, when viscosity of the silicon nitride powder slurry for mold release material is 500 P (poise) or higher, moving speed of silicon nitride particles in the mold release layer formed by coating with the silicon nitride powder slurry is slow. When viscosity of the silicon nitride powder slurry is 1.5 cP (centipoise) or lower, the release layer formed by coating with the silicon nitride powder slurry is easily sagged, making it difficult to maintain the mold release layer. Thus, it is preferable to adjust the slurry viscosity to the value exceeding 1.5cP and lower than 500P which can maintain fluidity of the particles and does not allow any sagging.

In the method for producing the polycrystalline silicon casting mold according to the present invention, the mold release layer forming step is a step for removing water from the silicon nitride powder slurry for mold release material with which the casting mold is coated, namely a step for drying the silicon nitride powder slurry for mold release material with which the casting mold is coated, at a temperature of, for example 30-120°C. The drying is preferably performed such that the water content becomes less than 0.5 mass%.

In the method for producing the polycrystalline silicon casting mold having the mold release layer according to the present invention, a baking step is unnecessary. Though the baking step may be performed, when the baking temperature exceeds 800°C in an atmosphere, the oxygen content in the mold release layer after baking increases and wettability of a silicon melt to the mold release layer increases, thus deteriorating the mold release property. Accordingly, the baking temperature is preferably 800°C or lower, more preferably 400°C or lower. By using the silicon nitride powder slurry according to the present invention, it is possible to form the mold release layer having a high adhesion and strength without a binder additive such as PVA or the like and without oxidizing treatment of the silicon nitride powder by only drying or by baking at a low temperature.

The polycrystalline silicon casting mold produced by the method for producing the polycrystalline silicon casting mold according to the present invention has the mold release layer containing the silicon nitride powder for mold release material having an oxygen content of 0.7-5.0 mass% on the inner surface of the casting mold. The silicon nitride powder for mold release material is obtained by coating the casting mold with the silicon nitride powder slurry containing the silicon nitride powder for a slurry use according to the present invention, which has a specific surface area of 5-50m²/g, a proportion of an amorphous silicon nitride of 1.0-25.0 mass%, and an oxygen content of 0.6-2.5 mass%, and drying the coated casting mold. The thickness of the mold release layer is not limited to a specific value, preferably 100-300µm.

The mold release layer of the polycrystalline silicon casting mold according to the present invention is dense and strong and can be formed by only drying or baking at a low temperature of 800°C or lower. By using the polycrystalline silicon casting mold having such a mold release layer, it is possible to prevent a silicon melt from penetrating through the inner surface of the casting mold, to improve a mold release property of a polycrystalline silicon ingot from the casting mold, and to suppress an occurrence of losses or damages during releasing the polycrystalline silicon ingot from the casting mold. Moreover, since contaminators do not mixed into the polycrystalline silicon ingot from the mold release layer at all, a polycrystalline silicon ingot having a high purity and high photoelectric transfer efficiency can be obtained at high yield.

Materials of a crucible for forming a casting mold with a mold release layer is not particularly limited, and a quartz crucible or a quartz crucible in which an inner surface of a graphite crucible is coated with quartz is generally used. When a quartz crucible is used, an adhesion of the mold release layer depends on a particle size of amorphous silica constituting the crucible, porosity of the formed crucible, smoothness of the surface of the crucible, combinations of viscosity of a slurry, additives in a slurry, and baking method of the casting mold after coating, and the mold release property of the silicon ingot after melting largely fluctuates.

### (Method for measuring each parameter)

Each parameter in the present invention can be measured by the following methods.

### (Chemical composition analysis method of amorphous Si-N(-H) compound)

A silicon (Si) content in an amorphous Si-N (-H) compound was measured by an ICP optical emission spectrometry conforming to "7. Quantitative analysis method of all Si content in JIS R 1603 Chemical analysis method of silicon nitride fine powder for fine ceramics". A nitrogen (N) content in an amorphous Si-N(-H) compound was measured by a neutralization titration analysis method of all nitrogen content after steam distilled separation conforming to "8. Quantitative analysis method of all Ni content in JIS R 1603 Chemical analysis method of silicon nitride fine powder for fine ceramics". An oxygen (O) content in an amorphous Si-N (-H) compound was measured by an inert gas fusion-carbon dioxide infrared absorption method conforming to "10. Quantitative analysis method of oxygen content in JIS R 1603 Chemical analysis method of silicon nitride fine powder for fine ceramics". In order to prevent oxidation of the amorphous Si-N(-H) compound, a sample is kept in a nitrogen atmosphere while being stored until just before processing for measurement in the case of measurement of silicon/nitrogen content by means of ICP optical emission spectrometry or a neutralization titration analysis method after steam distilled separation, and a sample is kept in a nitrogen atmosphere while being stored until just before measurement and being measured in the case of measurement of oxygen content by means of an infrared absorption method. A hydrogen (H) content in an amorphous Si-N(-H) compound was determined as a residual content obtained by removing silicon (Si)content, nitrogen (N) content, and oxygen (O) content from the entire amount of the amorphous Si-N(-H) compound based on stoichiometric composition. From the value described above, ratios of Si, N and H were calculated to determine the composition formula of the amorphous Si-N(-H) compound.

### (Methods for measuring specific surface area and particle size)

The specific surface areas of the silicon nitride powder for a slurry use according to the present invention and the amorphous Si-N(-H) compound were measured by a nitrogen adsorption single point BET method using Macsorb manufactured by Mountech Co., Ltd. The particle size distributions were measured by a laser diffraction/scanning type particle size distribution measuring apparatus (LA-910, manufactured by HORIBA, Ltd.).

### (Method for measuring oxygen contents of silicon nitride powder for slurry use, silicon nitride powder for mold release material and amorphous Si-N(-H) compound)

The oxygen contents of the silicon nitride powder for a slurry use and the silicon nitride powder for mold release material according to the present invention were measured by an inert gas fusion-carbon dioxide infrared absorption method conforming to "10. Quantitative analysis method of oxygen content in JIS R 1603 Chemical analysis method of silicon nitride fine powder for fine ceramics".

The oxygen content of the amorphous Si-N(-H) compound was measured by an inert gas fusion-carbon dioxide infrared absorption method conforming to "10. Quantitative analysis method of oxygen content in JIS R 1603 Chemical analysis method of silicon nitride fine powder for fine ceramics" in the same manner as described above. In this case, a sample is kept in a nitrogen atmosphere while being stored until just before measurement and being measured.

### (Method for measuring amount of amorphous silicon nitride)

Accurately weighed silicon nitride powder for a slurry use was added to a NaOH aqueous solution of 1.0N, and the mixture was heated and boiled. NH₃ gas generated by decomposition of silicon nitride was absorbed in 1% boric acid aqueous solution and an NH₃ amount in the absorbing solution was titrated by a 0.1N standard solution of sulfuric acid. The decomposed nitrogen amount was determined from the NH₃ amount in the absorbing solution. A crystallinity was calculated by the following equation using the decomposed nitrogen amount per 1g of a sample and theoretical nitrogen amount of 39.94g in silicon nitride.

Amorphous silicon nitride amount (%) = decomposed nitrogen amount per 1g of sample (g) x 100/39.94

### (Observation of particle figure)

Particle figures of crystalline particles according to the present invention and amorphous particles were observed by a transmission electron microscope at magnifications of 50,000 and 1,600,000.

### (Evaluation method of polycrystalline silicon casting mold)

With regard to the polycrystalline silicon casting mold, mold release property of a polycrystalline silicon ingot and adhesion of a mold release layer to a casting mold after production of a polycrystalline silicon ingot was evaluated by the following method.

The mold release property of a polycrystalline silicon ingot was evaluated as described below. O indicates that a polycrystalline silicon ingot can be released from a casting mold without breakage of the casting mold and penetration of silicon can not be observed by the naked eye at all, Δ indicates that a polycrystalline silicon ingot can be released from a casting mold without breakage of the casting mold and penetration of silicon into the casting mold can not be observed by the naked eye at all, and however, penetration of silicon into a mold release layer can be observed by the naked eye, and × indicates that a polycrystalline silicon ingot is fixed to a casting mold and a polycrystalline silicon ingot can not be released from the casting mold without breakage of the casting mold (in this case, silicon permeates the casting mold).

The adhesion of a mold release layer to a casting mold after production of a polycrystalline silicon ingot was evaluated as described below. O indicates that peeling-off of a mold release layer is not observed at all by the naked eye after a polycrystalline silicon is released from the casting mold, Δ indicates that peeling-off of a part of the side wall or bottom surface of the mold release layer is observed by the naked eye after a polycrystalline silicon is released from the casting mold and the surface of the casting mold is exposed, and × indicates that peeling-off of at least one of the whole surfaces of the side wall and bottom surface of the mold release layer is observed by the naked eye after a polycrystalline silicon is released from the casting mold and the surface of the casting mold is exposed. Where a polycrystalline silicon ingot can not be released from a casting mold without breakage, the polycrystalline silicon ingot is taken out of the casting mold by breaking the casting mold using a hammer and the adhesion of the mold release layer to the casting mold was evaluated in the same manner as the case where the polycrystalline silicon ingot can be released from the casting mold without breakage of the casting mold. Examples

Herein below, the present invention is explained in greater detail in view of the specific examples.

### (Example 1)

A silicon nitride powder of Example 1 was prepared as described below. First, a silicon diimide powder was prepared by reacting a toluene solution containing 30 vol% of silicon tetrachloride with liquid ammonia followed by washing with liquid ammonia and drying. Next, the resulting silicon diimide powder was supplied to a rotary kiln furnace at a rate of 30kg/hr and was subjected to thermal decomposition at a temperature of 1200°C under flow of air-nitrogen mixture gas with oxygen concentration in the mixture gas of 4 vol% at a flow rate of 80 liter/hr per one kilogram of silicon diimide powder to obtain an amorphous Si-N(-H) compound having a specific surface area of 300 m²/g and an oxygen content of 0.92 mass%. The resulting amorphous Si-N(-H) compound was disintegrated by using a continuous vibration mill filled with sintered silicon nitride balls to the extent that the disintegrated powder does not contain coarse agglomerate particles with a particle size of 50 µm or more. Herein, a particle size means a particle diameter according to the volumetric particle size distribution, which is measured by using a laser diffraction scattering method. The disintegrated amorphous Si-N (-H) compound was formed into almond-shaped briquettes each of 6mm thickness x 8mm short axis diameter x 12mm long axis diameter to 8mm thickness x 12mm short axis diameter x 18mm long axis diameter in an atmosphere of nitrogen using a briquette machine BGS-IV type manufactured by SINTOKOGIO, LTD. The obtained almond-shaped briquettes of about 1.0kg formed of amorphous Si-N(-H) compound were filled in a container made of graphite and having a size of 27cm square x 27cm depth into which lattices were inserted with interval of 4cm, and the temperature was increased to 1000°C at 1000°C/hr, 1000 to 1100°C at 100°C/hr, and 1100 to 1385°C at 83°C/hr in an atmosphere of nitrogen using a high temperature atmosphere furnace manufactured by FUJI DEMPA KOGYO CO. LTD. After keeping and calcining it at 1385°C for 1 hr and cooling, the powder was taken out and subjected to disintegration by using a continuous vibration mill filled with sintered silicon nitride balls to obtain a silicon nitride powder for a slurry use, which had a specific surface area of 14.6 m²/g, an oxygen content of 1.33 mass%, and an amorphous silicon nitride content of 1.00 mass% as shown in Table 1. The obtained silicon nitride powder for a slurry use was added to a polyethylene bottle which can be sealed hermetically, followed by adding water to the bottle such that silicon nitride content in the mixture was 20 mass%, adding to the bottle sintered silicon nitride balls with about 10mm diameter in an amount of twice as much as a total mass of silicon nitride powder and water, and fixing the bottle on a vibration mill with amplitude of 5 mm and frequency of 1780 cpm, and shaken for 5 min to mix the silicon nitride powder and water to prepare a silicon nitride powder slurry for mold release material.

An inner surface of a quartz crucible having a size of square 5 cm × depth 4 cm and a porosity of 16%, which has been previously heated to 40°C, was coated with the obtained silicon nitride powder slurry for mold release material according to Example 1 by spraying, followed by drying at 40°C. After coating and drying described above were repeated such that the mold release layer had a moderate thickness, the quartz crucible was hot-air dried for 15 hours at 40°C to obtain a polycrystalline silicon casting mold of Example 1. A thickness of the mold release layer of the polycrystalline silicon casting mold of Example 1 was 202 µm as an average value of five point measurement.

Aside from this, a dish was coated with the silicon nitride powder slurry for mold release material by spraying on the same condition as above, followed by drying at 40°C on the same condition as above. The oxygen content of the obtained silicon nitride powder for mold release material was 1.43 mass%.

In the resulting casting mold of Example 1, 75 g of maximum length 2 to 5 mm Si granules having purity of 99.999% were filled. Using a box type electric furnace, the casting mold was heated to melt the Si granules contained therein. The casting mold was cooled to solidify the Si melt, thus obtaining a polycrystalline silicon ingot. The temperature was raised until 1000°C for 3 hours, from 1000°C to 1450°C for 3 hours, and maintained at 1450°C for 4 hours under Ar flow of atmospheric pressure followed by cooling. After cooling, the casting mold was taken out of the electric furnace, and the polycrystalline silicon ingot was taken out of the casting mold. The polycrystalline silicon casting mold having the mold release layer was evaluated by the method above-described "Evaluation method of polycrystalline silicon casting mold". The results are described in Table 1. When the polycrystalline silicon casting mold of Example 1 was used, the polycrystalline silicon ingot could be taken out of the casting mold without breakage of the casting mold, penetration of Si into the mold release layer could not be observed by the naked eye, and thus a mold release property of the silicon ingot was good. Since the peeling-off of the mold release layer could not be observed by the naked eye after the polycrystalline silicon was released from the casting mold, it was found that adhesion of the mold release layer to the casting mold was good.

### (Examples 2-18)

Silicon nitride powders of Examples 2-18 were prepared as described below. A silicon diimide powder obtained in the same manner as Example 1 was supplied to a rotary kiln furnace at a rate of 25-35kg/hr and was subjected to thermal decomposition at a temperature of 600-1200°C under flow of air-nitrogen mixture gas with oxygen concentration in the mixture gas of 1-4 vol% at a flow rate of 30-100 liter/hr per one kilogram of silicon diimide powder to obtain amorphous Si-N(-H) compounds to be used in Examples 2-18, each having a specific surface area of 303-792 m²/g and an oxygen content of 0.45-1.33 mass% as shown in Table 1. The resulting amorphous Si-N(-H) compounds were disintegrated in the same manner as Example 1 and were formed into almond-shaped briquettes. The obtained almond-shaped briquettes formed of amorphous Si-N (-H) compounds were filled in a container used in Example 1 in an atmosphere of nitrogen and the temperature was increased to 1000°C at 1000°C/hr, 1000 to 1100°C at 100°C/hr, and 1100 to 1210°C or 1400°C at 10-1000°C/hr using a high temperature atmosphere furnace manufactured by FUJI DEMPA KOGYO CO. LTD. After keeping and calcining them at 1210-1400°C for 1 hr and cooling, the powders were taken out and subjected to disintegration to obtain silicon nitride powders for a slurry use of Examples 2-18, each having a specific surface area of 5.1-50.0 m²/g, an oxygen content of 0.70-2.38 mass%, and an amorphous silicon nitride content of 1.01-25.0 mass% as shown in Table 1.

Silicon nitride powder slurries for mold release material were produced using the obtained silicon nitride powders for a slurry use according to Examples 2-18 in the same manner as Example 1. Each inner surface of quartz crucibles each used in Example 1 was coated with the obtained silicon nitride powder slurries for mold release material of Examples 2-18 in the same manner as Example 1, followed by drying in the same manner as Example 1 to form a mold release layer on each inner surface of the quartz crucibles in the same manner as Example 1 and obtain polycrystalline silicon casting molds of Example 2-18. A thickness of each mold release layer of the polycrystalline silicon casting molds of Examples 2-18 was 150-220 µm as an average value of five point measurement. Moreover, dishes were coated with the silicon nitride powder slurries for mold release material on the same condition as in the case of quartz crucibles described above, followed by drying on the same condition as above. The oxygen contents of the obtained silicon nitride powders for mold release material were 0.82-4.93 mass%.

Silicon melts were solidified to produce polycrystalline silicon ingots in the same manner as Example 1 except using polycrystalline silicon casting molds of Examples 2-18. The mold release layers were evaluated in the same manner as Example 1. The results are described in the Table 1. When the polycrystalline silicon casting molds of Examples 2-18 were used, in each Example, the polycrystalline silicon ingot could be taken out of the casting mold without breakage of the casting mold, penetration of Si into the mold release layer could not be observed by the naked eye, and thus a mold release property was good. In each Example, since the peeling-off of the mold release layer could not be observed by the naked eye after the polycrystalline silicon was released from the casting mold, it was found that adhesion of the mold release layer to the casting mold was good.

### (Example 19)

A silicon nitride powder of Example 19 was prepared as described below. A silicon diimide powder obtained in the same manner as Example 1 was supplied to a rotary kiln furnace at a rate of 30kg/hr and was subjected to thermal decomposition at a temperature of 1200°C under flow of air-nitrogen mixture gas with oxygen concentration in the mixture gas of 1 vol% at a flow rate of 56 liter/hr per kilogram of silicon diimide powder to obtain amorphous Si-N(-H) compound to be used in Example 19, having a specific surface area of 303 m²/g and an oxygen content of 0.45 mass% as shown in Table 1. The resulting amorphous Si-N(-H) compound was disintegrated in the same manner as Example 1 and was formed into almond-shaped briquettes. The obtained almond-shaped briquettes formed of amorphous Si-N (-H) compound were filled in a container made of graphite and having a size of 40cm square x 40cm depth into which lattices ware inserted with interval of 4cm in an atmosphere of nitrogen. Using a pusher-type continuous furnace manufactured by TOKAI KONETSU KOGYO CO., LTD., calcining was performed at a temperature rising rate of 93°C/hr and average transfer rate of the container made of graphite of 1550mm/hr. In the pusher-type continuous furnace, each zone has a length of 1200mm and the temperatures in 1st zone to 12th zone were set to the following temperature. Namely, 1st zone was set to 0°C, 2nd zone was set to 0°C, 3rd zone was set to 0°C, 4th zone was set to 0°C, 5th zone was set to 300°C, 6th zone was set to 600°C, 7th zone was set to 957°C, 8th zone was set to 1029°C, 9th zone was set to 1101°C, 10th zone was set to 1173°C, 11th zone was set to 1245°C, and 12th zone was set to 1245°C. After cooling, the calcined silicon nitride powder taken out from the container was disintegrated in the same manner as Example 1 to obtain a silicon nitride powder for a slurry use of Example 19, which had a specific surface area of 49.0 m²/g, an oxygen content of 1.94 mass%, and an amorphous silicon nitride content of 22.8 mass% as shown in Table 1.

Next, a silicon nitride powder slurry for mold release material was produced using the obtained silicon nitride powder for a slurry use according to Example 19 in the same manner as Example 1. The inner surface of the quartz crucible used in Example 1 was coated with the obtained silicon nitride powder slurry for mold release material of Example 19 in the same manner as Example 1, followed by drying in the same manner as Example 1 to form a mold release layer on the inner surface of the quartz crucible in the same manner as Example 1 and obtain a polycrystalline silicon casting mold of Example 19. A thickness of the mold release layer of the polycrystalline silicon casting mold of Example 19 was 220 µm as an average value of five point measurement. Moreover, a dish was coated with the silicon nitride powder slurry for mold release material on the same condition as in the case of the quartz crucible described above, followed by drying on the same condition as above. The oxygen content of the obtained silicon nitride powder for mold release material were 3.59 mass%.

A silicon melt was solidified to produce a polycrystalline silicon ingot in the same manner as Example 1 except using the polycrystalline silicon casting mold of Example 19. The mold release layer was evaluated in the same manner as Example 1. The results are described in the Table 1. When the polycrystalline silicon casting mold of Example 19 was used, the polycrystalline silicon ingot could be taken out of the casting mold without breakage of the casting mold, penetration of Si into the mold release layer could not be observed by the naked eye, and thus a mold release property was good. Since the peeling-off of the mold release layer could not be observed by the naked eye after the polycrystalline silicon was released from the casting mold, it was found that adhesion of the mold release layer to the casting mold was good.

### (Examples 20-24)

Silicon nitride powders of Examples 20-24 were prepared as described below. A silicon diimide powder obtained in the same manner as Example 1 was supplied to a rotary kiln furnace at a rate of 25-35kg/hr and was subjected to thermal decomposition at a temperature of 600-1200°C under flow of air-nitrogen mixture gas with oxygen concentration in the mixture gas of 0-4 vol% at a flow rate of 30-120 liter/hr per one kilogram of silicon diimide powder to obtain amorphous Si-N(-H) compounds to be used in Examples 20-24, each having a specific surface area of 405-800 m²/g and an oxygen content of 0.35-1.19 mass% as shown in Table 1. The resulting amorphous Si-N(-H) compounds were disintegrated in the same manner as Example 1 and were formed into almond-shaped briquettes. The obtained almond-shaped briquettes formed of amorphous Si-N(-H) compound were filled in a container used in Example 1 in an atmosphere of nitrogen. Using a pusher-type continuous furnace manufactured by TOKAI KONETSU KOGYO CO., LTD., calcining was performed at a temperature rising rate of 10-350°C/hr and average transfer rate of the container made of graphite of 300-1750mm/hr. In the pusher-type continuous furnace, each zone has a length of 1200mm and the temperatures in 1st zone to 12th zone were set to the following temperatures. Namely, 1st zone was set to 0-600°C, 2nd zone was set to 0-900°C, 3rd zone was set to 0-1080°C, 4th zone was set to 0-1120°C, 5th zone was set to 0-1160°C, 6th zone was set to 0-1200°C, 7th zone was set to 300-1240°C, 8th zone was set to 600-1280°C, 9th zone was set to 900-1320°C, 10th zone was set to 1140-1360°C, 11th zone was set to 1260-1400°C, and 12th zone was set to 1260-1400°C. After cooling, the calcined silicon nitride powders taken out from the container were disintegrated in the same manner as Example 1 to obtain silicon nitride powders for a slurry use of Examples 20-24, each having a specific surface area of 5.2-18.5 m²/g, an oxygen content of 0.60-1.43 mass%, and an amorphous silicon nitride content of 1.02-9.85 mass% as shown in Table 1.

Silicon nitride powder slurries for mold release material were produced using the obtained silicon nitride powders for a slurry use of Examples 20-24 in the same manner as Example 1. Each inner surface of quartz crucibles each used in Example 1 was coated with the obtained silicon nitride powder slurries for mold release material of Examples 20-24 in the same manner as Example 1, followed by drying in the same manner as Example 1 to form a mold release layer on each inner surface of the quartz crucibles in the same manner as Example 1 and obtain polycrystalline silicon casting molds of Example 20-24. A thickness of each mold release layer of the polycrystalline silicon casting molds of Examples 20-24 was 185 µm as an average value of five point measurement. Moreover, dishes were coated with the silicon nitride powder slurries for mold release material on the same condition as in the case of quartz crucibles described above, followed by drying on the same condition as above. The oxygen content of the obtained silicon nitride powders for mold release material was 0.70-2.07 mass%.

Silicon melts were solidified to produce polycrystalline silicon ingots in the same manner as Example 1 except using polycrystalline silicon casting molds of Examples 20-24. The mold release layers were evaluated in the same manner as Example 1. The results are described in the Table 1. When the polycrystalline silicon casting molds of Examples 20-24 were used, in each Example, the polycrystalline silicon ingot could be taken out of the casting mold without breakage of the casting mold, penetration of Si into the mold release layer could not be observed by the naked eye, and thus a mold release property was good. Since the peeling-off of the mold release layer could not be observed by the naked eye, it was found that adhesion of the mold release layer to the casting mold was good.

### (Example 25)

A silicon nitride powder of Example 25 was prepared as described below. A silicon diimide powder obtained in the same manner as Example 1 was supplied to a rotary kiln furnace at a rate of 30kg/hr and was subjected to thermal decomposition at a temperature of 700°C under flow of air-nitrogen mixture gas with oxygen concentration in the mixture gas of 1 vol% at a flow rate of 170 liter/hr per one kilogram of silicon diimide powder to obtain amorphous Si-N (-H) compound to be used in Example 25, having a specific surface area of 690 m²/g and an oxygen content of 0.66 mass% as shown in Table 1. The resulting amorphous Si-N(-H) compound was disintegrated in the same manner as Example 1 and was formed into almond-shaped briquettes. The obtained almond-shaped briquettes formed of amorphous Si-N(-H) compound were supplied to an atmospheric rotary kiln furnace provided with an SiC furnace core tube, manufactured by MOTOYAMA CO., and were calcined. 6-parts-divided heating zones having an entire length of 1050mm are arranged in the SiC furnace core tube of the rotary kiln furnace and 1st zone to 6th zone are arranged from the end of a raw material inlet side to a calcined matter exhaust side. A temperature of each zone was controlled such that the temperatures near the outer wall of the furnace core tube in the centers of 1st zone to 6th zone were 600°C-900°C-1100°C-1245°C-1245°C-1100°C. The furnace core tube, which declined at 3° to the horizontal line, was rotated at 3rpm and the almond-shaped briquettes formed of amorphous Si-N(-H) compound were supplied thereto while flowing a nitrogen gas at a flow rate of 8 litter/minute through the inlet side to obtain a silicon nitride powder. After cooling, the calcined silicon nitride powder taken out from the container was disintegrated in the same manner as Example 1 to obtain a silicon nitride powder for a slurry use of Example 25, which had a specific surface area of 48.5 m²/g, an oxygen content of 2.43 mass%, and an amorphous silicon nitride content of 24.2 mass% as shown in Table 1.

Next, a silicon nitride powder slurry for mold release material was produced using the obtained silicon nitride powder for a slurry use of Example 25 in the same manner as Example 1. The inner surface of the quartz crucible used in Example 1 was coated with the obtained silicon nitride powder slurry for mold release material according to Example 25 in the same manner as Example 1, followed by drying in the same manner as Example 1 to form a mold release layer on the inner surface of the quartz crucible in the same manner as Example 1 and obtain a polycrystalline silicon casting mold of Example 25. A thickness of the mold release layer of the polycrystalline silicon casting mold of Example 25 was 198 µm as an average value of five point measurement. Moreover, a dish was coated with the silicon nitride powder slurry for mold release material on the same condition as in the case of the quartz crucible described above, followed by drying on the same condition as above. The oxygen content of the obtained silicon nitride powder for mold release material were 3.75 mass%.

A silicon melt was solidified to produce a polycrystalline silicon ingot in the same manner as Example 1 except using the polycrystalline silicon casting mold of Example 25. The mold release layer was evaluated in the same manner as Example 1. The results are described in the Table 1. When the polycrystalline silicon casting mold of Example 25 was used, the polycrystalline silicon ingot could be taken out of the casting mold without breakage of the casting mold, penetration of Si into the mold release layer could not be observed by the naked eye, and thus a mold release property was good. Since the peeling-off of the mold release layer could not be observed by the naked eye, it was found that adhesion of the mold release layer to the casting mold was good.

### (Examples 26-27)

Silicon nitride powders of Examples 26-27 were prepared as described below. A silicon diimide powder obtained in the same manner as Example 1 was supplied to a rotary kiln furnace at a rate of 25-30kg/hr and was subjected to thermal decomposition at a temperature of 600-950°C under flow of air-nitrogen mixture gas with oxygen concentration in the mixture gas of 0-1 vol% at a flow rate of 170 liter/hr per one kilogram of silicon diimide powder to obtain amorphous Si-N(-H) compounds to be used in Examples 26-27, each having a specific surface area of 470-800 m²/g and an oxygen content of 0.35-0.65 mass% as shown in Table 1. The obtained almond-shaped briquettes formed of amorphous Si-N(-H) compound were supplied to an atmospheric rotary kiln furnace provided with an SiC furnace core tube, manufactured by MOTOYAMA CO., and were calcined. 6-parts-divided heating zones having an entire length of 1050mm are arranged in the SiC furnace core tube of the rotary kiln furnace and 1st zone to 6th zone are arranged from the end of a raw material inlet side to a calcined matter exhaust side. A temperature of each zone was controlled such that the temperatures near the outer wall of the furnace core tube in the centers of 1st zone to 6th zone was 600°C-1100°C, 900°C-1210°C, 1100°C-1320°C , 1290°C-1400°C , 1290°C-1400°C , 1100°C-1320°C. The furnace core tube, which declined at 3° to the horizontal line, was rotated at 3rpm and the almond-shaped briquettes formed of amorphous Si-N(-H) compound were supplied thereto at a rate of 6kg/hr while flowing a nitrogen gas at a flow rate of 8 litter/minute through the inlet side to obtain silicon nitride powders. After cooling, the calcined silicon nitride powders taken out from the container were disintegrated in the same manner as Example 1 to obtain silicon nitride powders for a slurry use of Examples 26-27, each having a specific surface area of 7.2-24.4 m²/g, an oxygen content of 0.65-2.02 mass%, and an amorphous silicon nitride content of 1.02-13.3 mass% as shown in Table 1.

Silicon nitride powder slurries for mold release material were produced using the obtained silicon nitride powders for a slurry use of Examples 26-27 in the same manner as Example 1. Each inner surface of quartz crucibles each used in Example 1 was coated with the obtained silicon nitride powder slurries for mold release material of Examples 26-27 in the same manner as Example 1, followed by drying in the same manner as Example 1 to form a mold release layer on each inner surface of the quartz crucibles in the same manner as Example 1 and obtain polycrystalline silicon casting molds of Example 26-27. A thickness of each mold release layer of the polycrystalline silicon casting molds of Examples 26-27 was 190-210 µm as an average value of five point measurement. Moreover, dishes were coated with the silicon nitride powder slurries for mold release material on the same condition as in the case of quartz crucibles described above, followed by drying on the same condition as above. The oxygen content of the obtained silicon nitride powders for mold release material was 0.77-2.53 mass%.

Silicon melts were solidified to produce polycrystalline silicon ingots in the same manner as Example 1 except using polycrystalline silicon casting molds of Examples 26-27. The mold release layers were evaluated in the same manner as Example 1. The results are described in the Table 1. When the polycrystalline silicon casting molds of Examples 26-27 were used, in each Example, the polycrystalline silicon ingot could be taken out of the casting mold without breakage of the casting mold, penetration of Si into the mold release layer could not be observed by the naked eye, and thus a mold release property was good. Since the peeling-off of the mold release layer could not be observed by the naked eye, it was found that adhesion of the mold release layer to the casting mold was good.

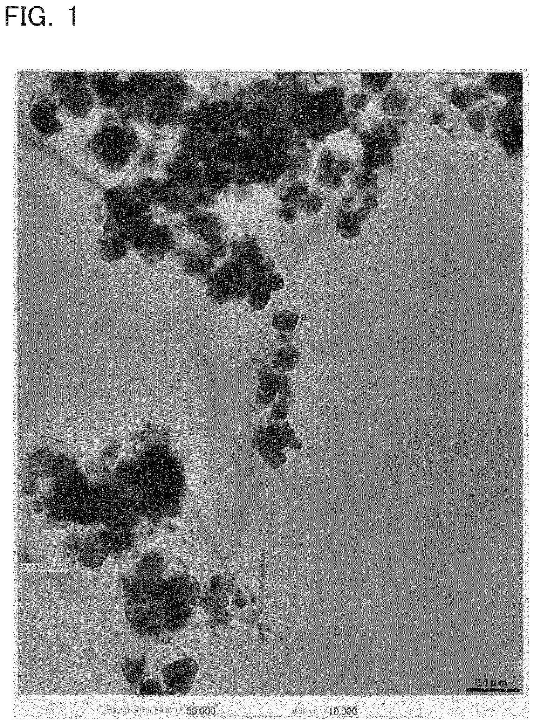

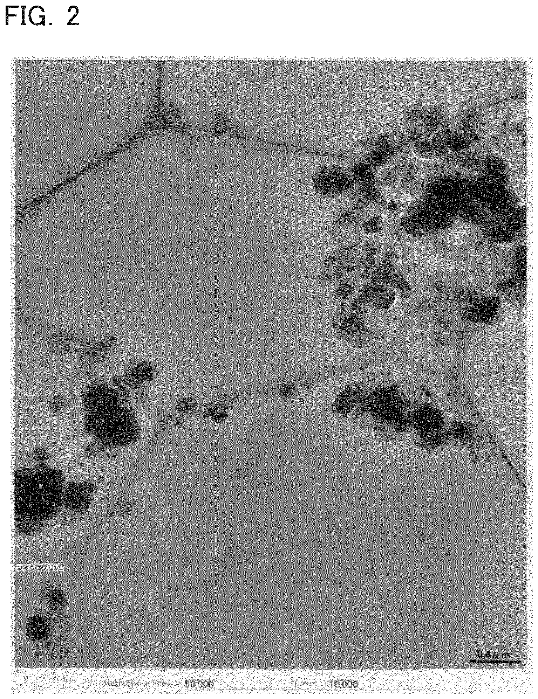

FIG. 1 is a TEM photograph of silicon nitride powder containing 8.22 mass% of amorphous silicon nitride used in Example 5. It has been found that crystallization of this silicon nitride powder proceeds as compared to the case of a silicon nitride powder containing 42.6 mass% of amorphous silicon nitride used in Comparative Example 4 shown in FIG.2 as described later, and the particles of the silicon nitride powder is crystallized and accompanied by crystal growth.

### (Comparative Example 1)

A silicon nitride powder of Comparative Example 1 was prepared as described below. First, a silicon diimide powder was prepared by reacting a toluene solution containing 30 vol% of silicon tetrachloride with liquid ammonia followed by washing with liquid ammonia and drying. Next, the resulting silicon diimide powder was supplied to a rotary kiln furnace at a rate of 30kg/hr and was subjected to thermal decomposition at a temperature of 1200°C under flow of air-nitrogen mixture gas with oxygen concentration in the mixture gas of 4 vol% at a flow rate of 80 liter/hr per one kilogram of silicon diimide powder to obtain an amorphous Si-N(-H) compound having a specific surface area of 300 m²/g and an oxygen content of 0.92 mass%. The resulting amorphous Si-N(-H) compound was disintegrated by using a continuous vibration mill filled with sintered silicon nitride balls to the extent that the disintegrated powder does not contain coarse agglomerate particles with a particle size of 50 µm or more. Herein, a particle size means a particle diameter according to the volumetric particle size distribution, which is measured by using laser diffraction scattering method. The disintegrated amorphous Si-N (-H) compound was formed into almond-shaped briquettes each of 6mm thickness x 8mm short axis diameter x 12mm long axis diameter to 8mm thickness x 12mm short axis diameter x 18mm long axis diameter in an atmosphere of nitrogen using a briquette machine BGS-IV type manufactured by SINTOKOGIO, LTD. The obtained almond-shaped briquettes of about 1.0kg formed of amorphous Si-N(-H) compound were filled in a container made of graphite and having a size of 27cm square x 27cm depth into which lattices ware inserted with interval of 4cm, and the temperature was increased to 1000°C at 1000°C/hr, from 1000 to 1100°C at 100°C/hr, and 1100 to 1425°C at 83°C/hr in an atmosphere of nitrogen using a high temperature atmosphere furnace manufactured by FUJI DEMPA KOGYO CO. LTD. After keeping and calcining it at 1425°C for 1 hr and cooling, the powder was taken out and subjected to disintegration by using a continuous vibration mill filled with sintered silicon nitride balls to obtain a silicon nitride powder for a slurry use of Comparative Example 1, which had a specific surface area of 11.9 m²/g, an oxygen content of 1.29 mass%, and an amorphous silicon nitride content of 0.35 mass% as shown in Table 1.

Next, in the same manner as Example 1, the obtained silicon nitride powder for a slurry use of Comparative Example 1 was added to a polyethylene bottle which can be sealed hermetically, followed by adding water to the bottle such that silicon nitride content in the mixture was 20 mass%, adding to the bottle sintered silicon nitride balls with about 10mm diameter in an amount of twice as much as a total mass of silicon nitride powder and water, and fixing the bottle on a vibration mill with amplitude of 5 mm and frequency of 1780 cpm, and shaken for 5 min to mix the silicon nitride powder and water to prepare a silicon nitride powder slurry for mold release material according to Comparative Example 1.

An inner surface of a quartz crucible having a size of square 5 cm × depth 4 cm and a porosity of 16%, which has been previously heated to 40°C, was coated with the obtained silicon nitride powder slurry for mold release material according to Comparative Example 1 by spraying, followed by drying at 40°C. After coating and drying described above were repeated such that the mold release layer had a moderate thickness, the quartz crucible was hot-air dried for 15 hours at 40°C to obtain a polycrystalline silicon casting mold of Comparative Example 1. A thickness of the mold release layer of the polycrystalline silicon casting mold of Comparative Example 1 was 212 µm as an average value of five point measurement. Moreover, a dish was coated with the silicon nitride powder slurry for mold release material according to Comparative Example 1 by spraying on the same condition as the case of the quartz crucible described above, followed by drying at 40°C on the same condition as above. The oxygen content of the obtained silicon nitride powder for mold release material was 1.30 mass%.

In the casting mold of Comparative Example 1 obtained in the same manner as Example 1, 75 g of maximum length 2 to 5 mm Si granules having purity of 99.999% were filled. Using a box type electric furnace, the casting mold was heated to melt the Si granules contained therein. The casting mold was cooled to solidify the Si melt, thus obtaining a polycrystalline silicon ingot. The temperature was raised until 1000°C for 3 hours, from 1000°C to 1450°C for 3 hours, and maintained at 1450°C for 4 hours under Ar flow of atmospheric pressure followed by cooling. After cooling, the casting mold was taken out of the electric furnace, and the polycrystalline silicon ingot was taken out of the casting mold. The polycrystalline silicon casting mold having the mold release layer was evaluated by the method above-described "Evaluation method of polycrystalline silicon casting mold". The results are described in the Table 1. When the polycrystalline silicon casting mold of Comparative Example 1 was used, the polycrystalline silicon ingot could be taken out of the casting mold without breakage of the casting mold, and penetration of Si into the casting mold could not be observed by the naked eye. However, penetration of Si into the mold release layer could be observed by the naked eye. With regard adhesion of the mold release layer to the crucible, the whole side wall of the casting mold was peeled off to expose the surface of the casting mold after the polycrystalline silicon ingot was taken out of the casting mold.

### (Comparative Examples 2-9)

Silicon nitride powders of Comparative Examples 2-9 were prepared as described below. A silicon diimide powder obtained in the same manner as Example 1 was supplied to a rotary kiln furnace used in Example 1 at a rate of 25-35kg/hr and was subjected to thermal decomposition at a temperature of 500-1200°C under flow of air-nitrogen mixture gas with oxygen concentration in the mixture gas of 0-4 vol% at a flow rate of 30-170 liter/hr per one kilogram of silicon diimide powder to obtain amorphous Si-N(-H) compounds to be used in Comparative Examples 2-9, each having a specific surface area of 280-850 m²/g and an oxygen content of 0.22-1.21 mass% as shown in Table 1. The resulting amorphous Si-N (-H) compounds shown in Table 1 were disintegrated in the same manner as Example 1 and were formed into almond-shaped briquettes. The obtained almond-shaped briquettes formed of amorphous Si-N (-H) compound were filled in a container used in Example 1 in an atmosphere of nitrogen and the temperature was increased to 1000°C at 1000°C/hr, from 1000 to 1100°C at 100°C/hr, and 1100 to 1190°C or 1430°C at 5-1200°C/hr using a high temperature atmosphere furnace manufactured by FUJI DEMPA KOGYO CO. LTD. After keeping and calcining them at 1190-1430°C for 1 hr and cooling, the powders were taken out and subjected to disintegration to obtain silicon nitride powders for a slurry use of Comparative Examples 2-9, each having a specific surface area of 3.3-98.0 m²/g, an oxygen content of 0.42-3.15 mass%, and an amorphous silicon nitride content of 0.40-51.0 mass% as shown in Table 1.

Silicon nitride powder slurries for mold release material according to Comparative Examples 2-9 were produced using the obtained silicon nitride powders for a slurry use of Comparative Examples 2-9 in the same manner as Example 1. Each inner surface of quartz crucibles each used in Example 1 was coated with the obtained silicon nitride powder slurries for mold release material of Comparative Examples 2-9 in the same manner as Example 1, followed by drying in the same manner as Example 1 to form a mold release layer on each inner surface of the quartz crucibles in the same manner as Example 1 and obtain polycrystalline silicon casting molds of Comparative Examples 2-9. A thickness of each mold release layer of the polycrystalline silicon casting molds of Comparative Examples 2-9 was 160-210 µm as an average value of five point measurement. Moreover, dishes were coated with the silicon nitride powder slurries for mold release material on the same condition as in the case of quartz crucibles described above, followed by drying on the same condition as above. The oxygen contents of the obtained silicon nitride powders for mold release material were 0.50-8.82 mass%.

Silicon melts were solidified to produce polycrystalline silicon ingots in the same manner as Example 1 except using polycrystalline silicon casting molds of Comparative Examples 2-9. The mold release layers were evaluated in the same manner as Example 1. The results are described in the Table 1. When the polycrystalline silicon casting molds of Comparative Examples 2-9 were used, in each Comparative Example, the polycrystalline silicon ingot could be taken out of the casting mold without breakage of the casting mold, and penetration of Si into the casting mold could not be observed by the naked eye. However, penetration of Si into the mold release layer could be observed by the naked eye, or the polycrystalline silicon ingot ware firmly fixed to the casting mold and could not be taken out of the casting mold without breakage of the casting mold. With regard adhesion of the mold release layer to the crucible, in each Comparative Example, a part of the side wall or bottom surface of the casting mold was peeled off to expose the surface of the casting mold after the polycrystalline silicon ingot was taken out of the casting mold, or the whole surface of at least one of the side wall and bottom surface of the casting mold was peeled off to expose the surface of the casting mold after the polycrystalline silicon ingot was taken out of the casting mold.

### (Comparative Example 10)

A silicon nitride powder of Comparative Example 10 was prepared as described below. A silicon diimide powder obtained in the same manner as Example 1 was supplied to a rotary kiln furnace used in Example 1 at a rate of 30kg/hr and was subjected to thermal decomposition at a temperature of 1200°C under flow of air-nitrogen mixture gas with oxygen concentration in the mixture gas of 1 vol% at a flow rate of 56 liter/hr per one kilogram of silicon diimide powder to obtain an amorphous Si-N(-H) compound to be used in Comparative Example 10, having a specific surface area of 303 m²/g and an oxygen content of 0.45 mass% as shown in Table 1. The resulting amorphous Si-N(-H) compound was disintegrated in the same manner as Example 1 and was formed into almond-shaped briquettes. About 9.0kg of the obtained almond-shaped briquettes formed of amorphous Si-N(-H) compound were filled in a container made of graphite and having a size of 40cm square x 40cm depth into which lattices ware inserted with interval of 4cm in an atmosphere of nitrogen. Using a pusher-type continuous furnace manufactured by TOKAI KONETSU KOGYO CO., LTD., calcining was performed at a temperature rising rate of 93°C/hr and average transfer rate of the container made of graphite of 1550mm/hr. In the pusher-type continuous furnace, each zone has a length of 1200mm and the temperatures in 1st zone to 12th zone were set to the following temperatures. Namely, 1st zone was set to 0°C, 2nd zone was set to 0°C, 3rd zone was set to 0°C, 4th zone was set to 0°C, 5th zone was set to 300°C, 6th zone was set to 600°C, 7th zone was set to 979°C, 8th zone was set to 1051°C, 9th zone was set to 1127°C, 10th zone was set to 1195°C, 11th zone was set to 1195°C, and 12th zone was set to 1100°C. After cooling, the calcined silicon nitride powder taken out from the container was disintegrated in the same manner as Example 1 to obtain a silicon nitride powder for a slurry use of Comparative Example 10, each having a specific surface area of 108.2 m²/g, an oxygen content of 2.96 mass%, and an amorphous silicon nitride content of 57.5 mass% as shown in Table 1.

Next, a silicon nitride powder slurry for mold release material according to Comparative Example 10 was produced using the obtained silicon nitride powder for a slurry use of Comparative Example 10 in the same manner as Example 1. The inner surface of the quartz crucible used in Example 1 was coated with the obtained silicon nitride powder slurry for mold release material according to Comparative Example 10 in the same manner as Example 1, followed by drying in the same manner as Example 1 to form a mold release layer on the inner surface of the quartz crucible in the same manner as Example 1 and obtain a polycrystalline silicon casting mold of Comparative Example 10. A thickness of the mold release layer of the polycrystalline silicon casting mold of Comparative Example 10 was 212 µm as an average value of five point measurement. Moreover, a dish was coated with the silicon nitride powder slurry for mold release material according to Comparative Example 10 on the same condition as in the case of the quartz crucible described above, followed by drying on the same condition as above. The oxygen content of the obtained silicon nitride powder for mold release material were 9.70 mass%.

A silicon melt was solidified to produce a polycrystalline silicon ingot in the same manner as Example 1 except using the polycrystalline silicon casting mold of Comparative Example 10. The mold release layer was evaluated in the same manner as Example 1. The results are described in the Table 1. When the polycrystalline silicon casting mold of Comparative Example 10 was used, the polycrystalline silicon ingot fixed to the casting mold and could not be taken out of the casting mold without breakage of the casting mold. A part of the side wall and the whole surface of the bottom surface of the casting mold were peeled off to expose the surfaces of the casting mold after the polycrystalline silicon ingot was taken out of the casting mold.

### (Comparative Examples 11-13)

Silicon nitride powders of Comparative Examples 11-13 were prepared as described below. A silicon diimide powder obtained in the same manner as Example 1 was supplied to a rotary kiln furnace used in Example 1 at a rate of 25-30kg/hr and was subjected to thermal decomposition at a temperature of 800-1200°C under flow of air-nitrogen mixture gas with oxygen concentration in the mixture gas of 0-4 vol% at a flow rate of 30-120 liter/hr per one kilogram of silicon diimide powder to obtain amorphous Si-N(-H) compounds to be used in Comparative Examples 11-13 each having a specific surface area of 405-478 m²/g and an oxygen content of 0.35-1.19 mass% as shown in Table 1. The resulting amorphous Si-N(-H) compounds were disintegrated in the same manner as Example 1 and were formed into almond-shaped briquettes. About 9.0kg of the obtained almond-shaped briquettes formed of amorphous Si-N (-H) compound were filled in a container made of graphite and having a size of 40cm square x 40cm depth into which lattices ware inserted with interval of 4cm in an atmosphere of nitrogen. Using a pusher-type continuous furnace manufactured by TOKAI KONETSU KOGYO CO., LTD., calcining was performed at a temperature rising rate of 8-450°C/hr and average transfer rate of the container made of graphite of 250-1750mm/hr. In the pusher-type continuous furnace, each zone has a length of 1200mm and the temperatures in 1st zone to 12th zone were set to the following temperatures. Namely, 1st zone was set to 0-600°C, 2nd zone was set to 0-900°C, 3rd zone was set to 0-1093°C, 4th zone was set to 0-1131°C, 5th zone was set to 0-1170°C, 6th zone was set to 0-1208°C, 7th zone was set to 0-1246°C, 8th zone was set to 300-1285°C, 9th zone was set to 592-1323°C, 10th zone was set to 901-1362°C, 11th zone was set to 1198-1440°C, and 12th zone was set to 1198-1440°C. After cooling, the calcined silicon nitride powders taken out from the container were disintegrated in the same manner as Example 1 to obtain silicon nitride powders for a slurry use of Comparative Examples 11-13, each having a specific surface area of 2.0-74.8 m²/g, an oxygen content of 0.44-2.76 mass%, and an amorphous silicon nitride content of 0.58-36.5 mass% as shown in Table 1.

Next, silicon nitride powder slurries for mold release material according to Comparative Examples 11-13 were produced using the obtained silicon nitride powder for a slurry use of Comparative Examples 11-13 in the same manner as Example 1. The inner surface of the quartz crucible used in Example 1 was coated with the obtained silicon nitride powder slurries for mold release material according to Comparative Examples 11-13 in the same manner as Example 1, followed by drying in the same manner as Example 1 to form mold release layers on the inner surfaces of the quartz crucible in the same manner as Example 1 and obtain polycrystalline silicon casting molds of Comparative Examples 11-13. A thickness of each mold release layer of the polycrystalline silicon casting molds of Comparative Examples 11-13 were 190-226 µm as an average value of five point measurement. Moreover, dishes were coated with the silicon nitride powder slurries for mold release material according to Comparative Examples 11-13 on the same condition as in the case of the quartz crucible described above, followed by drying on the same condition as above. The oxygen contents of the obtained silicon nitride powders for mold release material were 0.50-6.68 mass%.

Silicon melts were solidified to produce polycrystalline silicon ingots in the same manner as Example 1 except using the polycrystalline silicon casting molds of Comparative Examples 11-13. The mold release layers were evaluated in the same manner as Example 1. The results are described in the Table 1. When the polycrystalline silicon casting molds of Comparative Examples 11-13 were used, in each Comparative Example, the polycrystalline silicon ingot could not be taken out of the casting mold without breakage of the casting mold. With regard adhesion of the mold release layer to the crucible, in each Comparative Example, a part of the side wall or bottom surface of the casting mold was peeled off to expose the surface of the casting mold after the polycrystalline silicon ingot was taken out of the casting mold, or the whole surface of at least one of the side wall and bottom surface of the casting mold was peeled off to expose the surface of the casting mold after the polycrystalline silicon ingot was taken out of the casting mold.

### (Comparative Examples 14-15)

Silicon nitride powders of Comparative Examples 14-15 were prepared as described below. A silicon diimide powder obtained in the same manner as Example 1 was supplied to a rotary kiln furnace used in Example 1 at a rate of 30kg/hr and was subjected to thermal decomposition at a temperature of 600-800°C under flow of air-nitrogen mixture gas with oxygen concentration in the mixture gas of 0-1 vol% at a flow rate of 30-175 liter/hr per one kilogram of silicon diimide powder to obtain amorphous Si-N(-H) compounds to be used in Comparative Examples 14-15 each having a specific surface area of 478-690 m²/g and an oxygen content of 0.35-0.66 mass% as shown in Table 1. The resulting amorphous Si-N(-H) compounds were disintegrated in the same manner as Example 1 and were formed into almond-shaped briquettes. The obtained almond-shaped briquettes formed of amorphous Si-N (-H) compound were supplied to an atmospheric rotary kiln furnace provided with an SiC furnace core tube, manufactured by MOTOYAMA CO., and were calcined. 6-parts-divided heating zones having an entire length of 1050mm are arranged in the SiC furnace core tube of the rotary kiln furnace and 1st zone to 6th zone are arranged from the end of a raw material inlet side to a calcined matter exhaust side. A temperature of each zone was controlled such that the temperatures near the outer wall of the furnace core tube in the centers of 1st zone to 6th zone was 600°C, 900°C, 1100°C , 1190-1450°C, 1190-1450°C. The furnace core tube, which declined at 3° to the horizontal line, was rotated at 3rpm and the almond-shaped briquettes formed of amorphous Si-N(-H) compound were supplied thereto at a rate of 6kg/hr while flowing a nitrogen gas at a flow rate of 8 litter/minute through the inlet side to obtain silicon nitride powders. After cooling, the calcined silicon nitride powders taken out from the container were disintegrated in the same manner as Example 1 to obtain silicon nitride powders for a slurry use of Comparative Examples 14-15, each having a specific surface area of 7.9-171.0 m²/g, an oxygen content of 0.65-3.00 mass%, and an amorphous silicon nitride content of 0.96-83.0 mass% as shown in Table 1.

Next, silicon nitride powder slurries for mold release material according to Comparative Examples 14-15 were produced using the obtained silicon nitride powders for a slurry use of Comparative Examples 14-15 in the same manner as Example 1. The inner surfaces of the quartz crucibles used in Example 1 were coated with the obtained silicon nitride powder slurries for mold release material according to Comparative Examples 14-15 in the same manner as Example 1, followed by drying in the same manner as Example 1 to form mold release layers on the inner surfaces of the quartz crucibles in the same manner as Example 1 and obtain polycrystalline silicon casting molds of Comparative Examples 14-15. A thickness of each mold release layer of the polycrystalline silicon casting molds of Comparative Examples 14-15 were 188-203 µm as an average value of five point measurement. Moreover, dishes were coated with the silicon nitride powder slurries for mold release material according to Comparative Examples 14-15 on the same condition as in the case of the quartz crucible described above, followed by drying on the same condition as above. The oxygen contents of the obtained silicon nitride powders for mold release material were 0.68-14.1 mass%.

Silicon melts were solidified to produce polycrystalline silicon ingots in the same manner as Example 1 except using the polycrystalline silicon casting molds of Comparative Examples 14-15. The mold release layers were evaluated in the same manner as Example 1. The results are described in the Table 1. When the polycrystalline silicon casting molds of Comparative Examples 14-15 were used, the polycrystalline silicon ingot could be released from the casting mold without breakage of the casting mold, and penetration of silicon to the casting mold could not observed by the naked eye. However, penetration of silicon to the casting mold could be observed by the naked eye, or the polycrystalline silicon ingot fixed to the casting mold and it could not be released from the casting mold without breakage of the casting mold. Further, with regard adhesion of the mold release layer to the crucible, in each Comparative Example, a part of the side wall or bottom surface of the casting mold was peeled off to expose the surface of the casting mold after the polycrystalline silicon ingot was taken out of the casting mold, or the whole surface of at least one of the side wall and bottom surface of the casting mold was peeled off to expose the surface of the casting mold after the polycrystalline silicon ingot was taken out of the casting mold.

**[Table 1]**

| | Amorphous S-N(-H) compound | | Calcining condition | | | Analysis result after disintegration calcined powder | | | Silicon nitride powder slurry after drying at 120° C | Evaluation of casting mold for casting poly-Si ingot | |
|---|---|---|---|---|---|---|---|---|---|---|---|
| | SSA (m²/g) | O content (mass %) | Calcining furnace | Calcining Temperature (° C) | Temperature rising rate (° C/hr) | SSA (m²/g) | O content (mass %) | Content of amorphous S-N(-H) compound (mass %) | O content (mass %) | Mold release property of poly-Si ingot | Adhesiveness of mold release layer to casting mold |
| Example 1 | 300 | 0,92 | Batch | 1335 | 83 | 14.6 | 1.33 | 1.00 | 1.43 | ○ | ○ |
| Example 2 | 303 | 0.45 | furnace | 1210 | 100 | 49.8 | 1.65 | 25.0 | 4.93 | ○ | ○ |
| Example 3 | 364 | 1.21 | | 1220 | 1000 | 28.4 | 2.02 | 12.5 | 3.16 | ○ | ○ |
| Example 4 | 405 | 1.20 | | 1230 | 100 | 10.8 | 1.72 | 2.29 | 1.96 | ○ | ○ |
| Example 5 | 405 | 0.91 | | 1220 | 83 | 20.0 | 1.73 | 8.22 | 2.28 | ○ | ○ |
| Example 6 | 405 | 0.91 | | 1335 | 83 | 12.8 | 1.22 | 1.01 | 1.33 | ○ | ○ |
| Example 7 | 405 | 0.91 | | 1210 | 200 | 50.0 | 2.12 | 24.8 | 4.93 | ○ | ○ |
| Example 8 | 405 | 1.16 | | 1220 | 350 | 25.8 | 1.99 | 11.2 | 2.97 | ○ | ○ |
| Example 8 | 478 | 0.65 | | 1360 | 60 | 10.4 | 0.85 | 3.36 | 1.21 | ○ | ○ |
| Example 10 | 478 | 0.65 | | 1240 | 200 | 42.2 | 1.96 | 24.5 | 3.55 | ○ | ○ |
| Example 11 | 470 | 0.65 | | 1280 | 60 | 14.4 | 1.48 | 9.85 | 2.20 | ○ | ○ |
| Example 12 | 470 | 1.18 | | 1385 | 10 | 5.1 | 1.41 | 1.03 | 1.57 | ○ | ○ |
| Example 13 | 472 | 0.55 | | 1370 | 35 | 5.3 | 0.70 | 1.95 | 0.92 | ○ | ○ |
| Example 14 | 690 | 0.66 | | 1400 | 20 | 6.0 | 0.82 | 1.11 | 1.06 | ○ | ○ |
| Example 15 | 690 | 0.66 | | 1240 | 1000 | 42.8 | 1.97 | 23.7 | 3.76 | ○ | ○ |
| Example 16 | 684 | 1.33 | | 1245 | 100 | 31.9 | 2.01 | 18.3 | 3.11 | ○ | ○ |
| Example 17 | 792 | 0.65 | | 1400 | 10 | 6.2 | 0.92 | 1.22 | 102 | ○ | ○ |
| Example 18 | 792 | 0.65 | | 1240 | 100 | 39.8 | 2.38 | 25.0 | 3.95 | ○ | ○ |
| Example 19 | 303 | 0.45 | Pusher Furnace | 1245 | 93 | 49.0 | 1.94 | 22.8 | 3.59 | ○ | ○ |
| Example 20 | 405 | 1.19 | | 1380 | 350 | 10.7 | 1.28 | 1.02 | 1.39 | ○ | ○ |
| Example 21 | 470 | 0.65 | | 1300 | 60 | 18.5 | 1.43 | 9.85 | 2.07 | ○ | ○ |
| Example 22 | 800 | 0.35 | | 1400 | 10 | 5.2 | 0.60 | 1.02 | 0.70 | ○ | ○ |
| Example 23 | 478 | 0.65 | | 1400 | 350 | 8.7 | 0.99 | 2.50 | 1.13 | ○ | ○ |
| Example 24 | 478 | 0,35 | | 1260 | 35 | 7.3 | 1.03 | 4.90 | 1.42 | ○ | ○ |
| Example 25 | 690 | 0.66 | Rotary Kiln Furnace | 1245 | - | 48.5 | 2.43 | 24.2 | 3.75 | ○ | ○ |
| Example 26 | 470 | 0.65 | | 1290 | - | 24.4 | 2.02 | 13.3 | 2.53 | ○ | ○ |
| Example 27 | 800 | 0,35 | | 1400 | - | 7.2 | 0.65 | 1.02 | 0.77 | ○ | ○ |
| Com. Ex 1 | 300 | 0.92 | Batch Furnace | 1425 | 83 | 11.9 | 1.29 | 0,35 | 1.30 | Δ | × |
| Com. Ex 2 | 280 | 0.45 | | 1190 | 60 | 98.0 | 2.84 | 51.0 | 8.82 | × | × |
| Com. Ex 3 | 405 | 0.91 | | 1410 | 100 | 12.0 | 1.23 | 0.40 | 1.29 | Δ | × |
| Com. Ex 4 | 405 | 1.21 | | 1185 | 1000 | 96.0 | 3.15 | 42.6 | 7.53 | × | × |
| Com. Ex 5 | 478 | 0,35 | | 1380 | 5 | 3.3 | 0.55 | 0.50 | 0.56 | × | × |
| Com. Ex 6 | 690 | 0.66 | | 1225 | 1200 | 73.5 | 2.53 | 32.5 | 5.03 | × | Δ |
| Com. Ex 7 | 792 | 0.50 | | 1430 | 10 | 3.6 | 0.59 | 0.68 | 0.60 | × | × |
| Com. Ex 8 | 850 | 0.65 | | 1250 | 1200 | 55.3 | 3.10 | 29.8 | 5.15 | Δ | Δ |
| Com. Ex 9 | 690 | 0.22 | | 1380 | 8 | 3.8 | 0.42 | 1.20 | 0.50 | × | × |
| Com. Ex 10 | 303 | 0.45 | Pusher Furnace | 1195 | 93 | 108.2 | 2.96 | 57.5 | 9.70 | × | × |
| Com. Ex 11 | 478 | 0,35 | | 1440 | 350 | 2.0 | 0.49 | 0.58 | 0.50 | × | × |
| Com. Ex 12 | 405 | 1.19 | | 1198 | 450 | 74.8 | 2.76 | 36.5 | 6.68 | × | Δ |
| Com. Ex 13 | 478 | 0.35 | | 1400 | 8 | 3.1 | 0.44 | 1.28 | 0.50 | × | × |
| Com. Ex 14 | 680 | 0.66 | Rotary Kiln Furnace | 1180 | - | 171.0 | 3.00 | 83.0 | 14.1 | × | × |
| Com. Ex 15 | 478 | 0.35 | | 1450 | - | 7.9 | 0.65 | 0.96 | 0.68 | Δ | Δ |

### Industrial applicability

Since, according to the present invention, a mold release layer having an excellent mold release property and an excellent adhesion to a casting mold after casting a polycrystalline silicon ingot without additives such as an binder and baking step can be formed on the polycrystalline silicon casting mold, it is possible to provide the polycrystalline silicon casting mold which can produce the polycrystalline silicon ingot at a low cost.

## Claims

1. A silicon nitride powder to be used in a slurry for forming a mold release layer of a polycrystalline silicon casting mold, which has a specific surface area of 5-50m²/g, a proportion of amorphous silicon nitride of 1.0-25.0 mass%, and an oxygen content of 0.6-2.5 mass%.

2. A silicon nitride powder slurry for mold release material, which is obtained by blending the silicon nitride powder according to claim 1 and water.

3. A silicon nitride powder for mold release material, which is obtained by blending the silicon nitride powder according to claim 1 and water to form a slurry, and drying the slurry, and which has an oxygen content of 0.7-5.0 mass%.

4. Mold release material for forming a mold release layer to be formed on a polycrystalline silicon casting mold, which comprises the silicon nitride powder according to claim 3.

5. A polycrystalline silicon casting mold, which comprises a mold release layer formed on a casting mold, the mold release layer being formed of the mold release material according to claim 4.

6. A method for producing the silicon nitride powder for a slurry according to claim 1, which comprises thermally decomposing an amorphous Si-N(-H) compound at a temperature of 1200-1400°C in an atmosphere of at least one gas selected from the group consisting of a nitrogen gas, an inert gas and a reducing gas, in a rotary kiln furnace, or in a batch furnace or pusher-type continuous furnace in which a temperature rising rate at a temperature of 1100-1400°C is adjusted to be 10-1000°C/hr, the amorphous Si-N(-H) compound being obtained by thermally decomposing a nitrogen-containing silane compound and having a specific surface area of 300-800m²/g.

7. A method for producing a silicon nitride powder slurry for mold release material, which comprises blending the silicon nitride powder to be used in a slurry according to claim 1 and water

8. A method for producing a polycrystalline silicon casting mold, which comprises:
blending the silicon nitride powder according to claim 1 and water to form a slurry;
coating a surface of a polycrystalline silicon casting mold with the slurry; and
drying the slurry on the surface of the casting mold to form a mold release layer.
